# EUROPÄISCHE PATENTSCHRIFT

(11) **EP 2 407 847 B1**
(45) Veröffentlichungstag und Bekanntmachung des Hinweises auf die Patenterteilung: **08.05.2019**
(21) Anmeldenummer: 11170289.0
(22) Anmeldetag: 17.06.2011
(51) Int. Cl.: G05D 1/02

(54) **Selbsttätig verfahrbares Gerät sowie Verfahren zur Orientierung eines solchen Gerätes**
Self-propelled device and method for orienting such a device
Appareil automobile et procédé d'orientation d'un tel appareil

(30) Priorität: 01.07.2010 DE 102010017689
(43) Veröffentlichungstag der Anmeldung: 18.01.2012
(73) Patentinhaber: Vorwerk & Co. Interholding GmbH, 42275 Wuppertal (DE)
(72) Erfinder: Sauerwald, Andres, 46238 Bottrop (DE); Wallmeyer, Mario, 40217 Düsseldorf (DE); Schlischka, Patrick, 42349 Wuppertal (DE); Meyer, Frank, 58640 Iserlohn (DE); Meggle, Martin, 33442 Herzebrock (DE)
(74) Vertreter: Müller, Enno

(56) Entgegenhaltungen:
- US-A- 5 377 106
- US-A1- 2003 030 398
- US-A1- 2005 237 188

## Beschreibung

Die Erfindung betrifft ein Verfahren zur Orientierung eines selbsttätig verfahrbaren Gerätes nach den Merkmalen des Oberbegriffes des Anspruches 1. Derartige Verfahren sind bekannt. Hierbei verfährt das Gerät, welches in weiterer Ausgestaltung auch beispielsweise ein selbsttätig verfahrbares Transportgerät oder ein Rasenmähgerät sein kann, selbsttätig beispielsweise in einer Wohnung herum und nimmt hierbei bevorzugt vor einer ersten Arbeitsphase, beispielsweise einem ersten Reinigungs- oder Transportvorgang, eine Karte der gesamten Umgebung auf. Hierzu sind bevorzugt alle zu scannenden Bereiche/Räume geöffnet und zugänglich. Hierzu ist es bekannt, das Gerät mit Mitteln zur Rundum-Abstandsmessung zu versehen, so weiter beispielsweise in Form eines optischen Triangulationssystems, welches auf einer um eine Vertikalachse rotierende Plattform oder dgl. angeordnet ist. Mittels eines solchen Triangulationssystems können Abstandsmessungen zufolge Reflexionen erreicht werden, welche Abstandsmessungen zur Raumorientierung, weiter zur Hinderniserkennung sowie weiter bevorzugt zur Kartierung und entsprechend zur Erstellung von Raumkarten genutzt wird. Ein solches Triangulationssystem weist bevorzugt eine Lichtquelle und ein lichtempfindliches Element für die reflektierten Lichtstrahlen auf. Diesbezüglich wird beispielsweise auf die DE 10 2008 014 912 A1 verwiesen. Die zufolge Rundum-Abstandsmessung erfassten Raumbegrenzungen, gegebenenfalls unter Berücksichtigung etwaiger Hindernisse in den Räumen, werden in Form einer Kartierung der Umgebung, insbesondere der aus mehreren Räumen bestehenden Wohnung abgelegt, weiter bevorzugt in einem nicht flüchtigen Speicher des Gerätes, so dass im Zuge eines Reinigungs- oder Transportvorganges auf diese Kartierung zur Orientierung zurückgegriffen werden kann. Weiter ist diesbezüglich bekannt, anhand einer derart hinterlegten Kartierung zufolge weiter hinterlegter Algorithmen eine günstige Verfahrstrategie des Gerätes zu ermitteln.

Um eine günstige, weiter bevorzugt für den Nutzer nachvollziehbare und sinnvolle Verfahr- und/oder Reinigungsstrategie zu ermöglichen, ist es weiter bekannt, die hinterlegte Kartierung des Gesamtgebietes (insbesondere einer aus mehreren Räumen bestehenden Wohnung oder dgl.) zu unterteilen, so insbesondere in Teilkarten einzelner Räume oder Bereiche. Dies ermöglicht eine individuelle Ermittlung einer für den einzelnen Raum oder Bereich günstigen Strategie, insbesondere zum Abfahren des Bodens zur Reinigung desselben. Auch ist hierdurch beispielsweise in günstiger Weise das Herbeirufen des Gerätes in einen vorbestimmten, einer Teilkartierung entsprechenden Raum ermöglicht, so weiter beispielsweise unter Nutzung einer Fernbedienung oder dgl. In diesem Zusammenhang ist es weiter bekannt, eine solche Unterkartierung der Gesamtumgebung im Zuge der selbsttätigen Kartierung des Gerätes zufolge Benutzereingriff vorzunehmen, indem beispielsweise der Benutzer über eine Fernbedienung oder geräteseitige Tasten oder dgl. einen entsprechenden Befehl zum Starten oder Abschließen einer Teilkartierung übermittelt. Weiter ist diesbezüglich bekannt, zur Trennung von Räumen und/oder Bereichen und somit zur Aufteilung der Kartierung des Gesamtgebietes sogenannte Landmarken in der Wohnung aufzustellen, welche Raum- oder Bereichsgrenzen darstellen und von dem Gerät im Zuge der Kartierung erfasst werden.

Auch sind Verfahren der in Rede stehenden Art bekannt, bei welchen die Erstellung einer Kartierung des Gesamtgebietes zufolge Benutzerführung des Gerätes im Rahmen einer ersten Orientierungsfahrt erfolgt. Hierbei führt der Benutzer das Gerät beispielsweise mittels einer Fernbedienung durch das Gesamtgebiet, insbesondere durch die aus mehreren Räumen bestehende Wohnung, wobei im Zuge dieser Orientierungsfahrt bevorzugt zufolge einer Rundum-Abstands-messung der eingangs erwähnten Art ein Abscannen von Hindernissen, insbesondere Raumbegrenzungen erfolgt, wobei aus den ermittelten Daten eine Karte der gesamten Umgebung erstellt und bevorzugt hinterlegt wird.

Aus der EP 2 078 996 A2 ist ein Verfahren zur Orientierung eines selbsttätig verfahrbaren Gerätes bekannt, bei welchem zunächst eine Grobkarte und sodann eine Reihe von Teilgebieten erstellt werden. Die Aufteilung in die Teilgebiete wird nach Maßgabe einer Abmessung vorgenommen. Eine vergleichbare Unterteilung in Teilgebiete ist aus der US 2005/000543 A1 bekannt.

Aus der DE 10 2004 010 827 A1 ist ein Verfahren zur Orientierung eines selbsttätig verfahrbaren Gerätes bekannt, bei welchem die Beschaffenheit einer zu bearbeitenden Bodenfläche klassifiziert wird. In Abhängigkeit einer bei einem bearbeitenden Abfahren des Bodens erfasster Beschaffenheit der Bodenfläche kann das Gerät beispielsweise mit unterschiedlicher Drehzahl betrieben werden. Darüber hinaus ist es aus der EP 1 967116 A1 bekannt, bei einem selbsttätig verfahrbaren Gerät zur Orientierung eine Kartierung eines Gebietes vorzunehmen und die Einteilung von Bodenflächen in solche starker Verschmutzung und weniger Verschmutzung vorzunehmen.
Aus der US 2007/0282484 A1 ist des Weiteren bekannt eine Unterteilung eines Gesamtgebietes in Teilgebiete mit unterschiedlichem Bodenmaterial vorzunehmen.

Ausgehend von dem dargelegten Stand der Technik beschäftigt sich die Erfindung mit der Aufgabenstellung, ein Verfahren zur Orientierung eines selbsttätig verfahrbaren Gerätes anzugeben, das auf Gegebenheiten in einer zu reinigenden Fläche, insbesondere einer Wohnung, günstig eingestellt ist, wobei zusammenhängende Gebiete gleicher Rauigkeit und/oder Polausrichtung zu einem Teilgebiet zusammengefasst und abgespeichert werden.

Dieses Verfahren ist beim Gegenstand des Anspruches 1 gelöst, wobei darauf abgestellt ist, dass die Unterteilung in Teilgebiete im Hinblick auf unterschiedliche Bodenbeläge vorgenommen wird.

Hierzu ist bevorzugt das Gerät mit entsprechenden Sensoren zur Erfassung der Bodenbeläge versehen, so weiter beispielsweise mit taktilen, entsprechend den vom Gerät überfahrenen Bodenbelag abtastenden Sensoren oder auch mit Ultraschallsensoren, über welche die Struktur, nämlich die Rauigkeit und/oder Polausrichtung eines Bodenbelages ermitteln werden kann. So werden weiter bevorzugt zusammenhängende Gebiete gleicher Rauigkeit bzw. Polausrichtung - entsprechend gleiche Bodenbeläge - zu einem Teilbereich zusammengefasst, zugeordnet und bevorzugt abgespeichert, wobei weiter gegebenenfalls eine Unterteilung gleicher, angrenzender Bodenbeläge beispielsweise bei Erreichen eines vorgegebenen Flächen-Schwellwertes vorgenommen wird.
Es bedarf bevorzugt keines benutzerseitigen Eingriffs bzw. Befehls zum Anlegen einer Teilkartierung. Vielmehr führt das Gerät bevorzugt zugleich im Zuge der Kartierung des Gesamtgebietes oder nach Erstellung der Kartierung des Gesamtgebietes eine solche Unterteilung in Teilgebiete selbsttätig durch, dies bevorzugt anhand vorgegebener und hinterlegter Parameter. Die hinterlegte Kartierung besteht hiernach bevorzugt aus den Räumen oder Teilbereichen entsprechenden Teilkartierungen, wobei weiter das Gesamtgebiet zweckmäßig unterteilt ist. Das Gerät ist zufolge des vorgeschlagenen Verfahrens in der Lage die gegebenenfalls vorhandene Gesamtkarte in zweckmäßig zu unterscheidende Gebiete aus dieser zu extrahieren. Basierend auf der Gebietsunterteilung kann das Gerät weiter bevorzugt dem Nutzer über eine Anzeige (Display, gegebenenfalls mehrere LED's) anzeigen, in welchem der zugeordneten Gebiete dieses sich befindet.

Es kann vorgesehen sein, dass die Unterteilung in Teilgebiete entsprechend einer vorbestimmten Flächengröße eines Teilgebiets vorgenommen wird. Beispielsweise in einem Speicher ist in dem Gerät ein bevorzugt fester, gegebenenfalls jedoch auch vorab durch den Benutzer frei wählbarer Flächen-Schwellwert abgelegt. Das Gerät nimmt bevorzugt nach einer Kartierung, gegebenenfalls aber im Zuge einer solchen eine Unterteilung in Teilbereiche vor, so insbesondere zufolge der Berechnung der durch die Kartierung bestimmten freien Flächen des Gesamtbereiches und Unterteilung der freien Flächen in bevorzugt gleich große Teilbereiche von beispielsweise 10,15, 20, 25 oder 30 m². Der Flächen-Schwellwert ist hierbei in einer Ausgestaltung abhängig von der Gesamtfläche des Gesamtgebietes, so dass sich beispielsweise bei einem Gesamtgebiet von 70 bis 90 m² ein Flächen-Schwellwert von 20 m² oder einer Gesamtfläche von 110 bis 140 m² ein Flächen-Schwellwert von 30 m² anbietet. Die Anzahl der hiernach abgespeicherten Teilbereiche hängt entsprechend direkt vom kartierten Gesamtbereich ab. In einer Gesamtumgebung (beispielsweise Wohnung) von beispielsweise 70 m² würden bei einem beispielhaften Flächen-Schwellwert von 20 m² insgesamt vier Teilbereiche angelegt werden, wobei sich drei Teilbereiche von je 20 m² und ein Rest-Teilbereich von 10 m² ergeben. Der Teilbereich in dem sich das Gerät befindet kann stets durch ein Visualisierungselement angezeigt werden, so dass der Benutzer die Zuordnung nachvollziehen kann. Diese Form der Gesamtgebiet-Unterteilung führt nicht zwangsläufig zu einer Bereichsaufteilung, die sich an den tatsächlichen Raumgrenzen orientiert. Vielmehr ist zufolge der vorgeschlagenen Lösung auch eine raumübergreifende Teilkartierung möglich. In diesem Zusammenhang bieten sich weitere Parameter, wie weiter unten beschrieben, an, die beispielsweise unter Berücksichtigung eines vorgegebenen Flächen-Schwellwertes keine raumübergreifenden Teilkartierungen zulassen, so dass sich beispielsweise bei einem sich zu einem Nachbarraum öffnenden Raum von 50 m² bei einem Flächen-Schwellwert von 20 m² drei Teilflächen innerhalb des Raumes ergeben.

Zufolge der vorgeschlagenen Lösung ist ein handhabungsgünstiges Verfahren angegeben.

Auch wird vorgeschlagen, dass die Unterteilung in Teilgebiete anhand geometrischer Grundfiguren wie Quadrate und/oder Recht- und/oder Dreiecke und/oder Kreise und/oder Ellipsen vorgenommen wird. Hierbei werden die freien Flächen der Kartierung des Gesamtgebietes analysiert, wonach bevorzugt angepasst an die Flächengeometrie geometrische Grundfiguren bestmöglich eingepasst werden. Diese Einpassung der Geometrien erfolgt bevorzugt unter Zuhilfenahme von Algorithmen, welche beispielsweise auf Potenzialkarten arbeiten. So wird eine bestimmte Größe der geometrischen Grundfigur, weiter auch bevorzugt die Art der Grundfigur aus einer erfassten, in der Kartierung abgelegten Raumgrenze abgeleitet. So werden beispielsweise bei angrenzenden, einen Winkel von 90° einschließenden Raumbegrenzungen (Wände) geometrische Grundfiguren in Form von Rechtecken eingefügt, weiter bevorzugt Rechtecke größtmöglicher Dimensionen. Die hiernach verbleibenden Flächen der Kartierung werden bevorzugt sukzessive mit weiteren Grundfiguren, bevorzugt angepasst an die jeweiligen Raumbegrenzungen, sowie bevorzugt angepasst an die bereits hinterlegten Grundfiguren zur weiteren Unterteilung geometrisch aufgeteilt. Auch kann diesbezüglich eine Potentialkarte erzeugt werden, zur bestmöglichen Einpassung geometrischer Grundfiguren.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert. Sie können aber auch in einer Zuordnung zu nur einzelnen Merkmalen des Anspruches 1 oder des jeweiligen weiteren Anspruches oder jeweils unabhängig von Bedeutung sein.

In weiterer Ausgestaltung wird die Kartierung hinsichtlich langer, sich in einer Richtung erstreckender Wände analysiert. Hierzu sind roboterseitig Schwellwerte der Wandlängen hinterlegt, so beispielsweise Schwellwerte von 1, 1,5, 2, 2,5 oder auch 4 m. Ab einer Wandlänge, die den vorgegebenen Schwellwert übersteigt, wird diese als lange Wand erkannt. Alle erkannten langen Wände werden hiernach bevorzugt elongiert, d. h. virtuell verlängert. Anhand der sich hierbei ergebenden Schnitte der virtuellen Linien werden bevorzugt selbsttätig die verschiedenen Teilbereiche angelegt. Bevorzugt ist diesbezüglich weiter, dass bei Unterschreiten eines hinterlegten Mindestschwellwertes, beispielsweise von 0,5 m, des Abstandes zweier parallel zueinander verlaufender virtueller Linien insbesondere die virtuelle Linie der kürzeren Wand bei der Bereichsaufteilung ignoriert wird.

Weiter alternativ oder auch kombinativ wird vorgeschlagen, dass nach Erfassen des Gesamtgebietes Teilgebiete gleicher Größe durch Division durch eine vorgegebene Zahl bestimmt werden. Hierbei wird zunächst roboterseitig die angelegte Karte des Gesamtgebietes hinsichtlich der freien Flächen analysiert. Die Aufteilung der Gesamtfläche wird durch die Anzahl der zu vergebenden Bereiche, beispielsweise 3, 4, 6 oder 10 Bereiche dividiert. Es ergeben sich hiernach unabhängig von der Gesamtfläche des kartierten Gesamtgebietes Teilgebiete gleicher Größe, so beispielsweise 3, 4, 6 oder 10 Teilgebiete. In weiter bevorzugter Ausgestaltung ist diesbezüglich vorgesehen, dass die vorgegebene Zahl im Hinblick auf die erfasste Gesamtfläche vorbestimmt variabel ist, so beispielsweise nach einer entsprechenden Analyse der Kartierung des Gesamtgebietes unter Berücksichtigung der durch eine Division sich ergebenden Größen der Teilbereiche. Ergeben die Teilbereiche Flächen in einer Größe, welche einen beispielsweise hinterlegten Flächen-Schwellwert übersteigen, so wählt ein entsprechend vorgesehenes Programm einen höheren Divisor aus; entsprechend bei Unterschreiten eines vorgegebenen Flächen-Schwellwertes einen kleineren Divisor. So kann weiter zufolge aufeinanderfolgender Berechnungen ein Divisor gefunden werden, der eine Unterteilung in gleich große Teilflächen mit jeweils dem hinterlegten Flächen-Schwellwert annähender Größe erreichten lässt. Der Divisor ist bevorzugt eine natürliche Zahl größer Null.

Weiter kann vorgesehen sein, dass der zwischen zwei gegenüberliegenden Wänden gemessene Abstand mit vorgegebenen Werten, die einer Türbreite entsprechen, verglichen wird, zur Bestimmung eines Flächenbereiches als Türbereich. Bevorzugt sind roboterseitig diesbezügliche Schwellwerte hinterlegt, so insbesondere Schwellwerte angepasst an übliche Türbreiten, so weiter beispielsweise Schwellwerte von 0,6, 0,8 oder 1 m. Wird zufolge eines genutzten Algorithmus erkannt, dass zwei gegenüberliegende Wände sich näher sind als ein Schwellwert, stuft das Gerät selbsttätig diesen Bereich als potenzielle Tür ein. Eine solche Engstelle, beispielsweise in Form einer Tür wird bevorzugt roboterseitig selbsttätig zur Unterteilung des Gesamtgebietes in Teilgebiete genutzt, so dass sich Teilgebiete ergeben, die, gegebenenfalls neben weiteren Parametern, durch Raumübergänge, beispielsweise Türbereiche, begrenzt sind. Die Erfassung eines Türbereiches führt zum Abschluss des vorherigen Teilbereiches und gegebenenfalls zum Anlegen eines nächsten Teilbereiches. In weiterer Ausgestaltung können zufolge der Kartierungsdaten anhand typischer Ausmaße von Türzargen derartige Raumübergänge erkannt werden. Türzargen haben in der Regel typische Durchgangsbreiten zwischen 60 cm und 100 cm (beispielsweise 61, 73, 85 oder 86 cm,). Auch diese Türzargengrößen sind bevorzugt als Schwellgrößen hinterlegt.

In weiter bevorzugter Ausgestaltung werden die erfassten Werte des Flächenbereiches sowohl hinsichtlich des Abstandes der gegenüberliegenden Wände wie auch einer bodenparallelen Länge der Wände zur Bestimmung des Flächenbereiches als Türbereich herangezogen, so dass in vorteilhafter Weise typische Grundrissdimensionen von Türen bzw. Türdurchtritten eindeutig erfasst werden können, dagegen sich beispielsweise durch Hindernisse ergebende Abstände zwischen zwei gegenüberliegenden Wänden im maßlichen Bereich einer Türbreite bevorzugt ausgeschlossen werden. Türzargen weisen typische Durchgangstiefen zwischen 10 cm und 50 cm auf, welche Zargentiefen bevorzugt als diesbezügliche Schwellwerte in dem Roboter hinterlegt sind. Treffen die erfassten Abstände zwischen zwei gegenüberliegenden Wänden sowie die bodenparallele Länge der Wände in diesem Abstandbereich auf die hinterlegten Schwellwerte zu, so erfasst der Roboter dies als Türdurchbruch, nutzt dies weiter zum Abschluss bzw. zum Anlegen eines Teilbereiches. Die geometrischen Objekte werden bevorzugt aus der erstellten Navigationskarte (Kartierung des Gesamtgebietes) mittels Mustererkennung extrahiert, indem ein entsprechender Algorithmus gezielt nach solchen Objekten sucht, so weiter beispielsweise unter Nutzung eines Algorithmus wie Canny edge detector. Auch kann eine solche Türbreiten- und/oder Türtiefenerkennung im Zuge der Erstellung der Gesamtkartierung zu einem Anlegen bzw. Abschließen einer Teilkarte führen.

Zudem kann vorgesehen sein, dass mittels eines Bodenabstandssensors erfasste Unterschiede in der Bodenhöhe mit vorgegebenen Werten, die einer Türschwelle entsprechen, verglichen werden, zur Bestimmung eines Flächenbereiches als Türbereich. Entsprechend wird in vorteilhafter Weise mittels geeigneter Sensorik, beispielsweise Federbeinsensorik oder Bodenabstandssensorik (taktiler Sensor oder Ultraschallsensor) ein neuer Teilbereich anhand des Überquerens einer Türschwelle erkannt. Türschwellen weisen typische Höhen gegenüber dem umgebenden Boden auf, so weiter Höhen von 1 bis 3 cm, welche Höhen bevorzugt als Schwellwertbereiche in dem Roboter hinterlegt sind. Die Erfassung der Bodenhöhe kann einhergehen mit einer weiteren Erfassung der Länge des angehobenen Bodenbereiches im Zuge des Überquerens. Türschwellen weisen diesbezüglich typische Tiefen auf, die in der Regel angepasst sind an die Tiefen der zugeordneten Türzargen. Auch zufolge dieses Verfahrens lassen sich eindeutige Bereichsgrenzen erfassen, die zum Abschluss und/oder zur Anlage eines Teilbereiches führen. Die Erfassung der Bodenhöhe erfolgt hierbei bevorzugt berührungslos, weiter bevorzugt unter Nutzung eines in Richtung auf den Boden gerichteten Ultraschallsensors, dessen reflektierte und empfangenen Signale Aufschluss über den Abstand zur überfahrenen Bodenfläche zulassen. In weiterer Ausgestaltung erfolgt die Analyse der Bodenhöhe zufolge mechanischer Abtastung, wozu ein beispielsweise gelenkig geräteunterseitig angeordneter Tastarm vorgesehen ist, dessen winkelmäßige Anlenkstellung in Abhängigkeit vom relativen Abstand zum Boden gemessen wird. Mittels eines solchen taktilen Sensors wird insbesondere der Übergang vom Boden auf eine Bodenschwelle sowie der Übergang von der Bodenschwelle zurück auf einen Boden erfasst, wobei weiter bevorzugt über die Zeit zwischen den beiden Signalen und über die Verfahrgeschwindigkeit des Gerätes die in Verfahrrichtung betrachtete Länge des angehobenen Bereiches ermittelbar ist, zur bevorzugt eindeutigen Identifizierung einer Türschwelle.

Auch wird vorgeschlagen, dass ein Abstand zur Decke gemessen wird. Der Roboter verfügt entsprechend über Mittel, insbesondere über eine Sensorik, die den relativen, vertikalen Abstand von der Sensorik zur Raumdecke ermittelt. So ist hierdurch beispielsweise auch der Übergang aus einer Räumlichkeit, beispielsweise Wohnung in eine Freifläche, weiter beispielsweise der Übergang von einem Wohnzimmerbereich auf eine Terrasse erfassbar, da zufolge des vorgeschlagenen Verfahrens gegebenenfalls keine Decke ermittelbar ist, woraufhin der Roboter veranlasst wird den Bereich zu verlassen und sich wieder zurück in den zuletzt durchfahrenen Raum zurückzubewegen. Bevorzugt sind roboterseitig Schwellwerte bezüglich üblicher Deckenhöhen hinterlegt. Bei signifikantem Überschreiten der erfassten Deckenhöhe, insbesondere bei Erfassen einer quasi unendlichen Höhe wird bevorzugt dieser Bereich beispielsweise im Zuge der Kartierung des Gesamtbereiches nicht berücksichtigt, entsprechend auch kein diesbezüglicher Teilbereich angelegt oder alternativ gesondert markiert.

In weiter bevorzugter Ausgestaltung wird eine signifikante Änderung der erfassten Deckenhöhe, insbesondere eine signifikante Höhenreduzierung zur Bestimmung einer Bereichsgrenze berücksichtigt. Durchgänge zwischen Räumen (beispielsweise Türbereiche) zeichnen sich in der Regel durch eine verringerte Deckenhöhe aus. So weisen übliche Räume, insbesondere im Wohnbereich eine Deckenhöhe von 2,30 m bis 2,80 m auf, während die Deckenhöhe in einem Türbereich in der Regel etwa 2.00 m entspricht. Im Falle einer signifikanten Höhenänderung, insbesondere einer Änderung von mehr als 20, 30, 50 oder mehr cm legt in bevorzugter Ausgestaltung das Gerät selbsttätig einen neuen Teilbereich an bzw. schließt den zuvor angelegten Teilbereich ab.

Darüber hinaus kann vorgesehen sein, dass eine Helligkeits- und/oder Farbmessung vorgenommen wird und ein signifikanter Unterschied in der Helligkeit und/oder in dem Farbkontrast zur Bestimmung einer Bereichsgrenze herangezogen wird. Für das Erkennen eines neuen Teilbereiches wird insbesondere im Zuge einer Orientierungsfahrt zur Anlage einer Kartierung ein weiteres Kriterium herangezogen, so bevorzugt zufolge Auswertung von Helligkeits- und/oder Farbinformationen. Das Gerät ist hierbei in der Lage, basierend auf einer Helligkeits- und/oder Farbmessung zu ermitteln, ob eine signifikante veränderte Umgebung vorliegt. Diese Information wird genutzt um einen zuvor angelegten Teilbereich abzuschließen und/oder einen neuen Teilbereich anzulegen.

Zur Ermittlung von Helligkeitsunterschieden wird bevorzugt ein lichtempfindlicher Sensor eingesetzt, beispielsweise eine Fotodiode oder ein Fototransistor. Zur Farbmessung kommt beispielsweise ein entsprechender Sensor zum Einsatz, beispielsweise ein CCD-Sensor, wobei weiter bevorzugt mittels geeigneter Software Kontrastunterschiede ermittelt werden können, die in geeigneter Weise Kennzahlen zu dem erfassten Bildsegment liefern, die wiederum bei räumlicher Zuordnung mit Abstandwerten des bevorzugt vorgesehen Rundum-Scanners geeignete Indikatoren für Teilbereichsgrenzen darstellen. Weiter bevorzugt wird ein erkannter Helligkeits- und/oder Farbkontrastunterschied in Kombination mit weiteren Ergebnissen bevorzugt paralleler Messmethoden als Indiz zur Verifikation eines Teilbereiches genutzt.

Bevorzugt wird diesbezüglich weiter, dass der Helligkeitswert und/oder der Farbkontrast eines Bodens und/oder einer Wand berücksichtigt wird. Hierbei wird ausgenutzt, dass in der Regel sowohl Wände, als auch Türzargen oder auch Bodenbeläge in verschiedenen Räumen hinsichtlich ihrer Farbgebung und/oder hinsichtlich ihrer Helligkeitswerte unterschiedlich sind.

In einer Weiterbildung wird vorgeschlagen, dass zusätzlich mittels einer Kamera erfasste Bilder von im Raum befindlicher Gegenstände ausgewertet werden, zur Erkennung von Gegenständen, wie beispielsweise Türklinken, anhand einer Bilddatenbank und/oder zur Erkennung von typischen Strukturen, wie etwa winklig im Raum stehender Wände als Türen. Der Roboter verfügt entsprechend über eine visuelle Detektionseinheit in Form einer elektronischen Kamera oder eines CCD-Sensors. Mittels entsprechender Bildverarbeitungsalgorithmen und einer hinterlegten Datenbank bekannter, zu erkennender Gegenstände, beispielsweise Datenbank aller bekannter Türklinken, können diese Gegenstände als charakteristisches Merkmal zur Bereichserkennung genutzt werden und somit eine automatische Bereichserkennung bzw. Teilbereichsdifferenzierung leisten. So ist diesbezüglich vorgesehen, dass ein erfasster typischer Gegenstand wie eine Tür und/oder eine Türklinke zur Bestimmung eines Teilbereiches herangezogen wird. Die vorgesehene Kamera erfasst hierbei in bevorzugter Ausgestaltung einen Bereich vor dem selbst verfahrbaren Gerät, dies mit Bezug auf die übliche Verfahrrichtung des Gerätes. Hierbei ist weiter bevorzugt die Kamera so ausgerichtet, dass Gegenstände in einer Höhenerstreckung zwischen dem zu überfahrenden Boden und der Decke erfasst werden. Bei der Ermittlung von Gegenständen, wie beispielsweise Türklinken, kann der Erfassungswinkel, insbesondere der vertikale Erfassungswinkel eingeschränkt sein, beispielsweise auf einen Höhenbereich zwischen 80 cm und 150 cm.

Darüber hinaus wird vorgeschlagen, dass eine Drifterkennung vorgenommen wird und dass ein signifikanter Wechsel in der erfassten Drift zur Teilbereichsgrenzung herangezogen wird. Anhand des unterschiedlichen Drifts ist eine Aussage über eine veränderte Umgebung möglich. Hierbei detektiert das Gerät im Zuge des Verfahrens mittels einer Sensorik, beispielsweise einer Sensorik zur Abstandsmessung mittels Laserscanner, weiter bevorzugt unter Nutzung der Rundum-Abstandsmessung, stets, wie sich die gefahrene Ist-Strecke von der eigentlich durch die Radumdrehungen vorgegebenen Soll-Strecke unterscheidet. Hierzu ist in weiter bevorzugter Ausgestaltung zumindest ein Rad des Gerätes mit einer Sensorik zur Messung der Radumdrehungen versehen. Dieses Merkmal ändert sich bei unterschiedlichen Bodenbelägen relativ stark. So weisen Hartböden einen geringen Drift, Teppichböden hingegen zum Teil einen sehr hohen Drift auf, so beispielsweise ein Drift von 10 cm in jede der möglichen Bewegungsrichtungen des Gerätes auf einem Meter gefahrene Strecke. Der Drift als Merkmal wird bevorzugt bei einer Veränderung um mehr als 10 % von dem üblichen in der Fläche wirkenden Drift als signifikant angesehen. Weiterhin unterscheiden sich unterschiedliche Teppichböden wiederum deutlich anhand ihrer Vorzugspolrichtung, was sich entsprechend auch in einem unterschiedlichen Drift abzeichnet. Werden diese Merkmale für alle Gebiete der Kartierung mitgeführt, so kann hieraus eine für den Benutzer sinnvolle Aufteilung in verschiedene Teilbereiche selbsttätig durch das Gerät durchgeführt werden.

Auch kann das Gesamtgebiet mit einem vorgegebenen Grundriss verglichen werden und eine Unterteilung des Gesamtgebietes in Teilgebiete entsprechend einer durch den vorgegebenen Grundriss gegebenen Unterteilung vorgenommen werden. In dem selbst verfahrbaren Reinigungsgerät sind bevorzugt ein oder mehrere typische Grundrissvarianten insbesondere von Wohnungen oder beispielsweise Büroetagen hinterlegt, insbesondere in Form von Daten in einem bevorzugt nicht flüchtigen Speicher gesichert. Jeder abgelegte und so vorgegebene Grundriss weist bevorzugt eine vorab vorgenommene Unterteilung in Teilgebiete auf. Zufolge beispielsweise einer Rundum-Abstandsmessung und/oder im Zuge einer Lernfahrt wird die Kartografie des zu durchfahrenen und bevorzugt abzureinigenden Gesamtgebietes erstellt und hiernach - bevorzugt nach Abschluss der Gesamtgebieterkennung - mit dem oder den in dem bevorzugt mitgeführten Speicher hinterlegten Vorgabe-Grundrisse verglichen, dies gegebenenfalls ohne Berücksichtigung der tatsächlichen Raumerstreckungsmaße. Der hierbei anstehende Vergleich bezieht sich entweder auf den gesamten Grundriss des Gesamtgebietes oder alternativ bzw. kombinativ nur auf Teilbereiche, beispielsweise zum Unterteilen eines Raumes in Teilbereiche. So sind weiter beispielsweise typische Grundrissformen beispielsweise zur Abteilung eines Wohnbereiches von einem Essbereich oder weiter beispielsweise zur Unterteilung eines Wohnbereiches mit angeschlossenem, bevorzugt barrierefrei zugänglichem Wintergarten usw. hinterlegt. Großflächige Erkerbereiche oder weiter beispielsweise räumliche Verbindungen von Wohnraum- und Essbereichen, die oft mit einem türlosen und relativ groß dimensionierten Durchbruch verbunden sind, werden so in vorteilhafter Weise aufgrund festgestellter Ähnlichkeiten selbsttätig erkannt, zur weiteren selbsttätigen Unterteilung dieser Bereiche in Teilbereiche. Darüber hinaus können bei sogenannten Standardgrundrissen insbesondere von Wohnungen (Grundrisse sehr ähnlicher Wohnungszuschnitte) den einzelnen Räumen bereits vorab und somit vorgegeben Raumbezeichnungen (Küche, Flur, Wohnzimmer usw.) zugeordnet werden, welche Raumbezeichnungen bei einer festgestellten Ähnlichkeit zu dem ermittelten Grundriss in die erstellte Karte eingetragen werden bzw. den einzelnen Teilbereichen zugeordnet werden. Durch diese begriffliche Einordnung sind weiter bevorzugt dem Reinigungsgerät jedem Teilbereich bevorzugte Reinigungsstrategien und/oder -intervalle zuordbar, darüber hinaus gegebenenfalls auch die Wahl eines von dem Reinigungsgerät mitzutragenden Reinigungswerkzeuges.

In einer Weiterbildung des Erfindungsgegenstandes ist vorgesehen, dass die vom Gerät bestimmten Teilbereiche auf einem Bildschirm angezeigt werden, so entsprechend für den Benutzer visualisiert werden. Entsprechend ergibt sich die Möglichkeit, über den Bildschirm dem Benutzer unmittelbar anzuzeigen, in welchem Raum bzw. in welchem Teilbereich sich das Gerät zur Zeit befindet. Weiter können über den Bildschirm auch Informationen über den derzeit durchgeführten Arbeitsgang des Gerätes aufgezeigt werden. Auch besteht hierüber die Möglichkeit, weiter beispielsweise bei Ausbildung des Bildschirmes als Touch-Screens oder dgl. dem Gerät Befehle zu übermitteln, beispielsweise in welchen Raum bzw. zu welchem Teilbereich dieses verfahren soll und/oder zur Übermittlung von weiteren Arbeitsbefehlen.

Im Anschluss an die selbsttätige Bereichserkennung kann in einer Weiterbildung des Erfindungsgegenstandes eine manuelle Korrektur der Raum- bzw. Teilbereichsgrenzen erfolgen. Hierzu ist vorgesehen, dass ein Nutzer des Gerätes auch beispielsweise mittels eines Touch-Screens dargestellte Bereichsgrenzen zur Änderung der Bereiche verändern kann. So können beispielsweise Bereichs- bzw. Teilbereichsgrenzen verschoben werden, um so eine Überarbeitung der Teilgebiete in eine insbesondere für den Benutzer sinnvolle Unterteilung zu ändern. So bietet es sich diesbezüglich beispielsweise an, den Bildschirm, insbesondere den Touch-Screen in einer Fernbedienung für das Gerät oder in einem mobilen Telefon, weiter alternativ an einem Computer anzubieten, wobei auf dem Bildschirm Bereichs- bzw. Teilbereichsgrenzen farblich markiert sind. Beispielsweise durch Erfassen und Ziehen der Bereichsgrenzen mittels eines Touch-Pens können diese in ihrer Lage relativ zur Gesamtkartierung und/oder hinsichtlich ihrer Ausrichtung verändert werden.

Geräte in Form von selbsttätig verfahrbaren Reinigungs-, Transport- oder Rasenmähgeräten können mit den vorgeschlagenen Lösungen ohne äußere Beeinflussung durch den Benutzer selbsttätig und eigenständig neue Bereiche erkennen, dies unter Nutzung der ein Abbild des Gesamtbereiches darstellenden Kartierung in dem Gerät. Diese Karte repräsentiert die Umgebung, welche durch die vorgeschlagenen Lösungen in mehrere Arbeitsbereiche aufgeteilt werden kann, welche Aufteilung durch unterschiedliche, auch untereinander kombinierbare Möglichkeiten geschieht.

Bezüglich aller angegebenen Wertebereiche sind alle Zwischenwerte, insbesondere in 1 m-, 1 cm- oder 1 m²- Schritten sowohl hinsichtlich einer ein- und mehrfachen Einengung der angegebenen Bereichsgrenzen in beispielsweise der angegebenen Schrittweite von oben und/oder von unten, wie auch zur Darstellung singulärer Werte innerhalb der angegebenen Bereiche hiermit in die Offenbarung eingeschlossen.

Nachstehend ist die Erfindung anhand der beigefügten Zeichnung, welche lediglich mehrere Ausführungsbeispiele darstellt, näher erläutert. Es zeigt:
- Fig. 1: in perspektivischer Darstellung ein selbsttätig verfahrbares Gerät in Form eines Bodenreinigungsgerätes;
- Fig. 2: eine schematische Grundrissdarstellung einer aus mehreren Räumen bestehenden Wohnung;
- Fig. 3: eine schematische Darstellung einer in dem Gerät hinterlegten kartografischen Darstellung des Gesamtbereiches;
- Fig. 4: eine der Fig. 3 entsprechende Darstellung der Kartografie nach einer geräteseitigen Analyse und Aufteilung der Gesamtfläche in gleich große Teilflächen;
- Fig. 5: eine der Fig. 4 entsprechende Darstellung, jedoch nach Unterteilung der Gesamtfläche zufolge Division;
- Fig. 6: eine weitere der Fig. 4 entsprechende Darstellung, jedoch nach einer Unterteilung der Gesamtfläche in Teilflächen mit unterschiedlichen Bodenbelägen;
- Fig. 7: eine Kartografie in einer weiteren Ausführung bei Aufteilung der Gesamtfläche in Teilflächen zufolge Analyse langgestreckter Flächenbegrenzungen;
- Fig. 8: eine schematische Darstellung einer Umgebungskarte nach einer Analyse derselben zur Unterteilung der Gesamtfläche in Teilgebiete unter Nutzung geometrischer Grundfiguren, nach Erzeugung einer Potenzialkarte;
- Fig. 9: eine Folgedarstellung zu Fig. 8 nach einer Analyse der Potenziale und einer Einpassung einer ersten geometrischen Grundfigur;
- Fig. 10: eine Folgedarstellung zu Fig. 9 nach Abschluss der Analyse und entsprechender Aufteilung der Gesamtfläche in Teilflächen;
- Fig. 11: eine Unterteilung einer den Gesamtbereich betreffenden Kartierung gemäß Fig. 3 in Teilbereiche zufolge Analyse der Kartierung hinsichtlich ausgewerteter Türdurchbrüche;
- Fig. 12: in schematischer Vertikalschnittdarstellung den Bereich einer Türschwelle, wobei das Gerät einen Bodenabstandssensor zur Erfassung der Bodenhöhe aufweist;
- Fig. 13: den schematischen Vertikalschnitt durch den Bereich zweier benachbarter Räume, die durch einen Türdurchbruch miteinander verbunden sind, wobei das Gerät einen Sensor zur Erfassung der Raumhöhe aufweist;

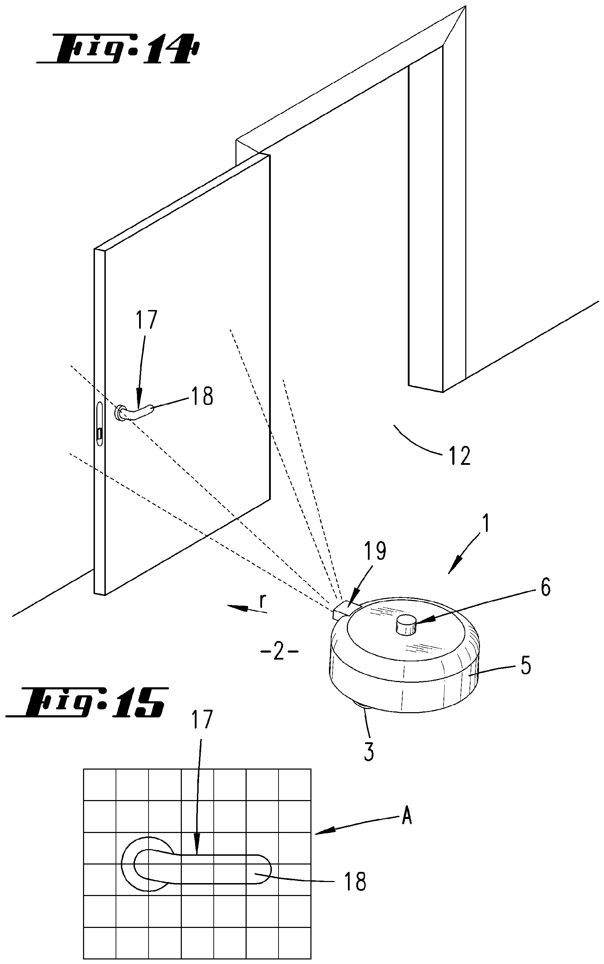

- Fig. 14: in schematischer perspektivischer Darstellung den Bereich eines Türdurchbruches mit zugeordneter Tür, wobei das Gerät über eine Kamera und Auswerteeinheit verfügt, zur Erfassung von Gegenständen, wie beispielsweise Türklinken;
- Fig. 15: in schematischer Darstellung das erfasste Bild einer Türklinke;
- Fig. 16: in schematischer Darstellung einen, einen Touch-Screen aufweisenden Teilbereich einer Fernbedienung für das Gerät, zur Darstellung der Kartierung, insbesondere der durch das Gerät selbsttätig erstellten Teilbereiche;
- Fig. 17: eine weitere schematische Grundrissdarstellung einer aus mehreren Räumen bestehenden Wohnung;
- Fig. 18: eine schematische Darstellung einer in dem Gerät hinterlegten kartografischen Darstellung des Gesamtbereiches gemäß dessen Wohnungs-Grundrisses in Fig. 17;
- Fig. 19: eine in einem Speicher des Gerätes hinterlegte Standard-Grundrissdarstellung mit hierin eingetragenen Teilbereichsbegrenzungen;
- Fig. 20: die Unterteilung des Gesamtbereiches gemäß Fig. 18 in Teilbereiche zufolge festgestellter Ähnlichkeit des Gesamtbereiches mit dem in Fig. 19 dargestellten hinterlegten Grundriss;
- Fig. 21: einen Ausschnitt eines weiteren Gesamtbereiches;
- Fig. 22: einen hinterlegten Teilbereich-Grundriss mit eingetragenen Teilbereichsmarkierungen;
- Fig. 23: die Unterteilung des Gesamtbereiches gemäß Fig. 21 in Teilbereiche zufolge festgestellter Ähnlichkeit des Gesamtbereiches bzw. Ausschnittes des Gesamtbereiches mit dem Grundrissausschnitt in Fig. 22.

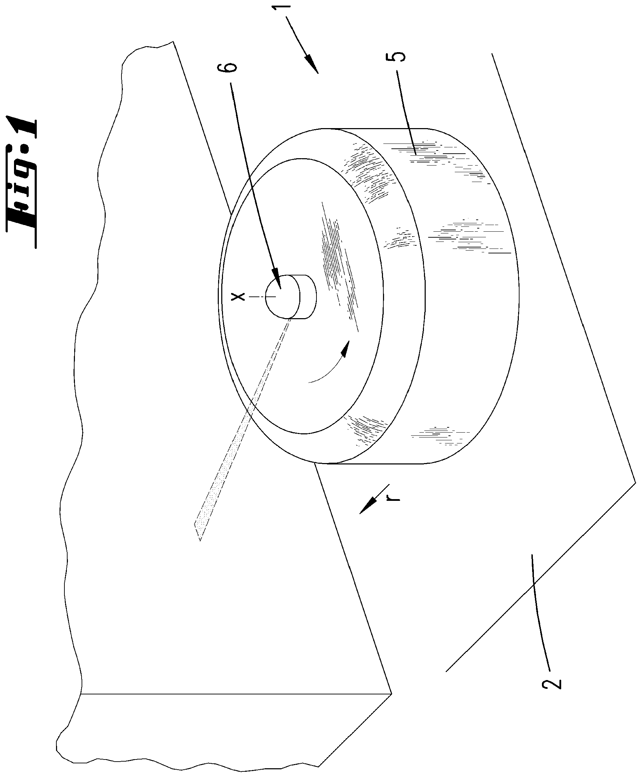

Dargestellt und beschrieben ist zunächst mit Bezug zu Fig. 1 ein Gerät 1 in Form eines Saug- und/oder Kehrgerätes, weiter in Form eines selbsttätig verfahrbaren Haushalts-Bodengerätes. Dieses besitzt ein Chassis, welches unterseitig, dem zu pflegenden Boden 2 zugewandt, elektromotorisch angetriebene Verfahrräder 3 sowie bevorzugt eine über die Unterkante des Chassisbodens hinausragende, gleichfalls elektromotorisch angetriebene Bürste 4 trägt. Das Chassis ist überfangen von einer Gerätehaube 5, wobei das Gerät 1 einen kreisförmigen Grundriss aufweist. Bezüglich der Ausgestaltung des Gerätes 1 als Saug- und/oder Kehrgerät wird beispielsweise auf die DE 102 42 257 A1 verwiesen. Der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen.

Weiter kann, wenn gleich nicht dargestellt, das Gerät 1 zusätzlich oder auch alternativ zu der Bürste 4 eine Saugmundöffnung aufweisen. In diesem Fall ist in dem Gerät 1 weiter ein Sauggebläsemotor angeordnet, der elektrisch betrieben ist.

Die Elektroversorgung der einzelnen Elektrokomponenten des Gerätes 1 wie für den Elektromotor der Verfahrräder 3, für den Elektroantrieb der Bürste 4, gegebenenfalls für das Sauggebläse und darüber hinaus für die weiter vorgesehene Elektronik in dem Gerät 1 zur Steuerung desselben erfolgt über einen nicht dargestellten, wieder aufladbaren Akkumulator.

Das Gerät 1 ist weiter mit einer Sensoranordnung 6 versehen. Diese ist oberseitig der Gerätehaube 5 des Gerätes 1 angeordnet und um eine vertikale Achse x, welche zugleich die zentrale Vertikalachse des Gerätes 1 darstellt, drehbar. Die Sensoranordnung 6 besteht bevorzugt aus einem Triangulationssystem, mittels welchem eine Rundum-Abstandsmessung (über 360° um die Achse x) durchgeführt werden kann.

Bei dem Triangulationssystem handelt es sich bevorzugt um ein optisches System, wobei bevorzugt in einer Ausgestaltung ein Sender in Form einer Lichtquelle, weiter in Form einer LED und Laserdiode vorgesehen ist, wobei weiter die Lichtquelle monochromatisches Licht aussendet, so weiter sichtbares Licht, gegebenenfalls aber auch für den Menschen nicht sichtbares Licht, beispielsweise Infrarotlicht. Weiter weist das Triangulationssystem einen Empfänger auf, dies weiter bevorzugt in Form eines lichtempfindlichen Elements. Hierbei handelt es sich beispielsweise um ein PSD-Element oder auch um ein CCD- oder CMOS-Element in linienförmiger, d. h. eindimensionaler Bauweise. Weiter bevorzugt ist Bestandteil des Empfängers auch eine Empfängerlinse, die dem lichtempfindlichen Element vorgeschaltet ist.

Mit Hilfe der vorbeschriebenen Sensoranordnung 6 ist zunächst eine Hinderniserkennung erreicht, so dass das Gerät 1 kollisionsfrei sich auf dem Boden 2 bzw. in seiner Umgebung bewegen kann. Darüber hinaus ist, wie weiter bevorzugt, über die Sensoranordnung 6 eine Rundum-Abstandsmessung der Umgebung - hier der Räume R₁ bis R₆ - ermöglicht, wobei die hierbei ermittelten Entfernungswerte zu Hindernissen und Wänden in der Umgebung zur Erstellung einer Kartografie K des Gesamtgebietes G genutzt werden, welche Kartografie K in dem Gerät 1 abgespeichert und hinterlegt wird. Die Kartografie K kann darüber hinaus auch im Rahmen einer ersten, benutzergeführten Lernfahrt des Gerätes 1 erstellt werden. Zufolge der hinterlegten Kartografie K und eines Scannens der Umgebung bevorzugt mittels der Sensoranordnung 6 ist das Gerät 1 in der Lage, die eigene Position in dessen Umgebung bzw. in der Kartografie K eindeutig zu bestimmen und gegebenenfalls auf einem Bildschirm 7, beispielsweise ausgebildet als Touchscreen 8 einer Fernbedienung 9 für das Gerät 1, anzuzeigen, dies weiter bevorzugt innerhalb der zugleich auf dem Bildschirm 7 angezeigten Kartografie K.

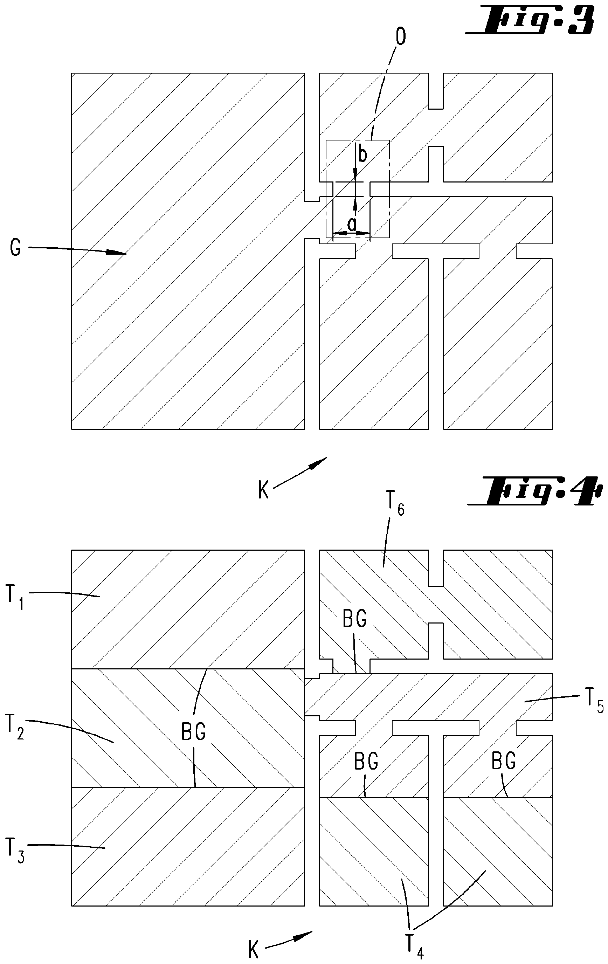

Zur zweckmäßigen Abreinigung der einzelnen Räume R₁ bis R₆ bzw. einzelner Bereiche (gegebenenfalls Teilbereiche eines Raumes) besteht das Bedürfnis das durch die Kartografie K dargestellte Gesamtgebiet (vgl. Fig. 3) im Zuge der Kartierung oder nach Abschluss der Kartierung in Teilbereiche zu unterteilen, so dass insbesondere zufolge eines vom Benutzer ausgelösten Befehls ein solcher Teilbereich gezielt durch das Gerät anfahrbar und dessen Bodenbelag gegebenenfalls abreinigbar ist.

Zum Anlegen solcher Teilgebiete sind, wie nachfolgend näher beschrieben, unterschiedliche Verfahren vorgesehen.

So wird gemäß einer ersten Ausführungsform (vgl. Fig. 4) die durch das Gerät im Zuge einer ersten Orientierungsfahrt selbsttätig erstellte Kartografie K des Gesamtgebietes G hinsichtlich der freien Flächen geräteseitig anhand vorgegebener Algorithmen analysiert, woraufhin das Gesamtgebiet G in Teilgebiete T₁ bis T₆ aufgeteilt wird, welche Teilgebiete T₁ bis T₆ zumindest annähernd und weiter bevorzugt gleiche Flächenmaße aufweisen. Entsprechend erfolgt die Unterteilung gemäß einer fest vorgegebenen Quadratmeterzahl, wobei diese Vorgabe bevorzugt geräteseitig einprogrammiert ist. In weiterer Ausgestaltung erfolgt die Vorgabe der festen Teilgebietabmaße in Abhängigkeit von einer Analyse der Gesamtgebietabmaße, so dass beispielsweise bei einer Gesamtfläche der sich aus den Räumen R₁ bis R₆ zusammensetzenden Wohnung W von beispielsweise 160 m² eine Aufteilung in Teilgebiete T₁ bis Tₙ von jeweils 20 m² ergibt und bei einer Gesamtfläche der Wohnung W von beispielsweise 80 m² eine Unterteilung in Teilgebiete T₁ bis Tₙ von jeweils 10 m². Darüber hinaus ist auch durch Benutzereingriff das Flächenmaß eines jeden Teilgebietes vorwählbar, so beispielsweise mittels einer dem Gerät 1 zugeordneten Fernbedienung 9. So kann der Benutzer beispielsweise unter verschiedenen, gegebenenfalls fest vorgegebenen Teilflächenmaßen wählen, so weiter beispielsweise in 5 m²-Schritten.

Wie insbesondere aus der Darstellung in Fig. 4 zu erkennen, ergeben sich zufolge der Aufteilung in gleich große Flächen Teilgebiete T₁ bis T₆, welche nicht zwangsläufig nur einem Raum R₁ bis R₆ zugeordnet sind bzw. einen Raum R₁ bis R₆ vollständig abdecken. Vielmehr ergibt sich bei dem dargestellten Beispiel eine beispielhafte Unterteilung des Raumes R₁ in drei gleich große Teilgebiete T₁ bis T₃, wobei die Räume R₅ und R₆ durch ein gemeinsames Teilgebiet T₆ abgedeckt ist. Das Teilgebiet T₅ erstreckt sich über die gesamte Fläche des flurartigen Raumes R₄, weiter teilweise einragend in die Flächen der Räume R₂ und R₃, deren Restflächen zusammen das Teilgebiet T₄ bilden.

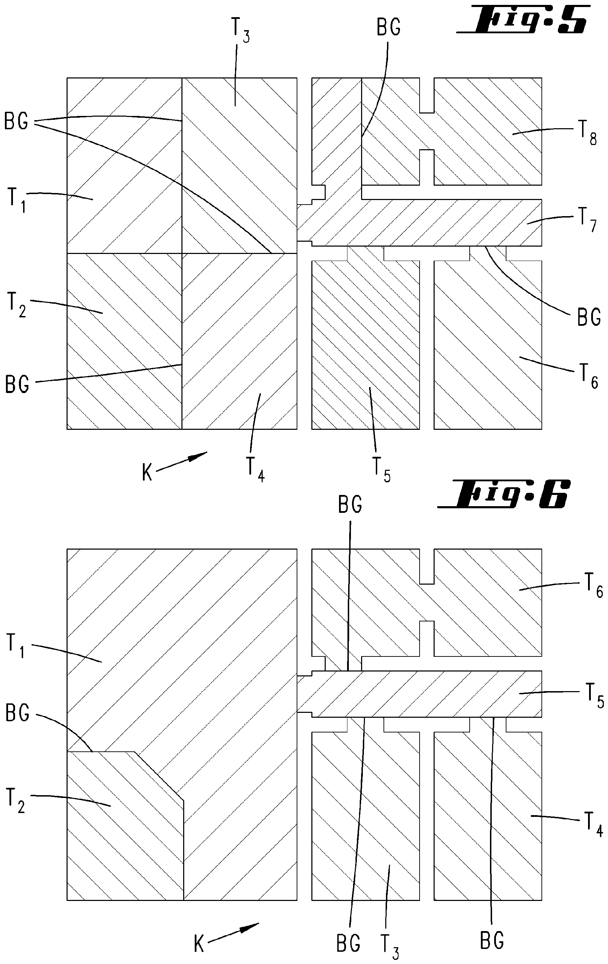

Eine alternative Möglichkeit zur Aufteilung des Gesamtgebietes G nach Erstellung der Kartografie K zeigt die Darstellung in Fig. 5. Hier erfolgt eine selbsttätige, geräteseitige Unterteilung der Fläche des Gesamtgebietes G nach entsprechender Analyse der Kartografie K zufolge Division durch einen vorgegebenen, gegebenenfalls anhand der vorgeschalteten Analyse angepassten oder durch den Benutzer beispielsweise mittels der Fernbedienung 9 angegebenen Divisor. In dem dargestellten Ausführungsbeispiel ist die Fläche des Gesamtgebietes G unterteilt in acht gleich große Teilgebiete T₁ bis T₈, wobei in dem dargestellten Ausführungsbeispiel der Raum R₅ teilflächenmäßig aufgeteilt ist in einen, den Raum R₆ aufnehmenden und sich in den Raum R₅ erstreckenden Teilbereich T₈ sowie einen Teilbereich T₇, der den flurartigen Raum R₄ sowie einen Teilbereich des Raumes R₅ abdeckt.

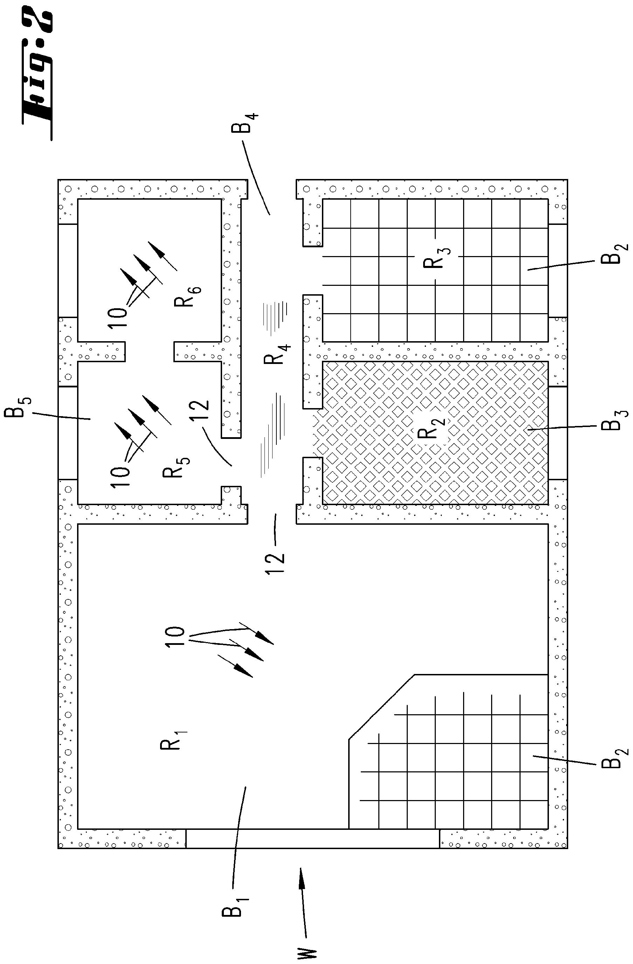

Auch kann eine Unterkartierung, d. h. das Anlegen von Teilgebieten, während der Orientierungsfahrt zur Erstellung der Kartografie K erfolgen. So ist in einer Ausführungsform das Gerät 1 mit einem Bodenbelagssensor in Form eines taktilen Sensors oder, wie weiter bevorzugt, in Form eines Ultraschallsensors versehen, der auf den Boden 2 gerichtet zur Analyse des jeweiligen Bodenbelages dient. So führen Teppichböden zu einem gegenüber Hartböden wesentlich veränderten Reflexionssignal, so dass das zufolge entsprechender Messung auf den jeweiligen Bodenbelag zurückgeschlossen werden kann. Weiter alternativ, bevorzugt kombinativ hierzu wird über eine entsprechende Sensorik der auf unterschiedlichen Bodenbeläge sich einstellende Drift des Gerätes 1 berücksichtigt. Hierzu wird das Gerät 1 in bevorzugter Ausgestaltung die Sensoranordnung 6, um über diese die Soll-Strecke, beispielsweise bis zum Erreichen eines Hindernisses in Form einer Wand oder dgl., zu ermitteln. Zugleich wird über eine weiter vorgesehene Sensorik die Umdrehung eines, weiter bevorzugt beider Verfahrräder 3 registriert, zur Ermittlung der tatsächlich gefahrenen Ist-Strecke. Dieses Merkmal ändert sich bei unterschiedlichen Bodenbelägen relativ stark. Hartböden zeigen einen geringen Drift, Teppichboden hingegen einen demgegenüber erhöhten Drift von beispielsweise 10 cm in jede der möglichen Bewegungsrichtungen auf einen Meter gefahrene Strecke. Weiterhin unterscheiden sich unterschiedliche Teppichböden wiederum deutlich anhand ihrer Vorzugsrichtung. Diese ist in der Grundrissdarstellung gemäß Fig. 2 durch die unterschiedlich ausgerichteten Pfeile 10 symbolisiert.

So sind in dem dargestellten Ausführungsbeispiel die Räume R₅ und R₆ mit einem Bodenbelag B₅ in Form eines Teppichbodens mit gleicher Polrichtung ausgelegt. Der Raum R₄ hingegen weist einen Bodenbelag B₄ in Form eines Hartbodens, beispielsweise eines Laminatbodens auf, während der Raum R₂ mit einem Bodenbelag B₃ in Form eines sich wiederum zu einem Hart- oder Teppichboden unterscheidenden Korkboden ausgelegt ist. Ein Teilbereich des Raumes R₁ sowie der gesamte Raum R₃ sind in dem dargestellten Ausführungsbeispiel mit Steinzeugfliesen oder dgl. ausgelegt. Die entsprechenden Bodenbeläge sind mit B₂ bezeichnet. Der Restbereich des Raumes R₁ ist in dem dargestellten Ausführungsbeispiel ausgelegt mit einem Bodenbelag B₁ in Form eines Teppichbodens, wobei hier die Polrichtung (Pfeile 10) entgegengesetzt gerichtet ist zu der des Bodenbelages B₅.

Der Wechsel der Bodenbeläge und/oder der Polrichtungen von insbesondere Teppichböden wird durch das Gerät 1 im Zuge der Erstellung der Kartografie K zur Abteilung von Teilgebieten T₁ bis T₆ genutzt, wobei zusammenhängende Gebiete gleicher Bodenbeläge bzw. gleicher Rauigkeit und/oder Polausrichtung - weiter bevorzugt innerhalb eines definierten Toleranzbereiches - zu einem Teilgebiet zusammengefasst und abgespeichert werden (vgl. Fig. 6 Teilbereich T₆ der Räume R₅ und R₆).

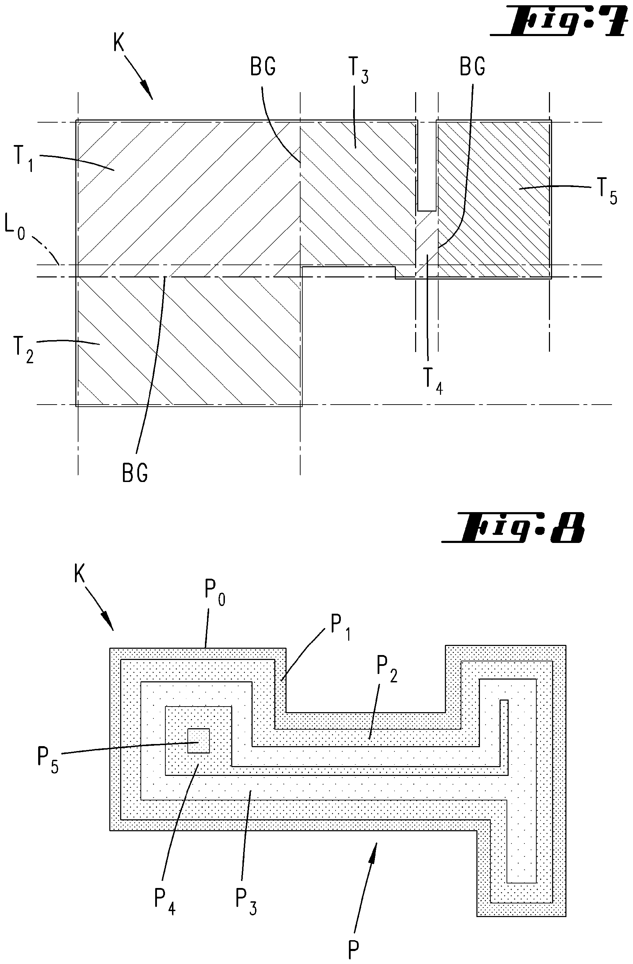

Auch wird eine Analyse der vorab erstellten Kartografie K hinsichtlich langer, sich in einer gemeinsamen vertikalen Ebene erstreckender Wände analysiert. So ist bevorzugt geräteseitig eine diesbezügliche Minimal-Wandlänge hinterlegt, so beispielsweise eine Minimal-Wandlänge von 1 oder 2 m. Wird zufolge entsprechender Berechnung unter Zuhilfenahme hinterlegter Algorithmen ein Wandverlauf erkannt, der der Minimal-Wandlänge entspricht oder diese übertrifft, wird diese als "lange" Wand erkannt. Alle erkannten "langen" Wände werden programmseitig elongiert, so dass sich entsprechend der Darstellung in Fig. 7 anhand der strichpunktiert dargestellten Linien ein Raster ergibt, mittels welchem eine Unterteilung des Gesamtgebietes G in Teilgebiete T₁ bis T₅ vorgenommen wird. Ist der Abstand zweier elongierter Linien "langer" Wände unterhalb eines vorgegebenen Mindestschwellwertes, beispielsweise unterhalb von 20 oder 10 cm, so wird eine der Linien bei der Bereichsaufteilung ignoriert, so in dem dargestellten Ausführungsbeispiel gemäß Fig. 7 die Linie L₀.

Weiter alternativ oder auch kombinativ zu den vorbeschriebenen Lösungen betreffen die Fig. 8 bis 10 ein Verfahren, bei welchem die vorab erstellte Kartografie K des Gesamtgebietes G hinsichtlich der freien Flächen analysiert wird und hiernach in die freien Flächen vorgegebene geometrische Grundfiguren 11 bestmöglich eingepasst werden. Die Grundfiguren 11 können Quadrate und/oder Recht- und/oder Dreiecke und/oder Kreise und/oder Ellipsen sein. Das Einpassen der Geometrien bzw. Grundfiguren 11 wird bevorzugt unter Zuhilfenahme von Algorithmen bewerkstelligt, die weiter bevorzugt auf Potenzialkarten arbeiten.

Um eine Potenzialkarte P zu erstellen, werden zunächst alle in der Kartografie K hinterlegten Hindernisse, so insbesondere Wände identifiziert. Diese Hindernisse erhalten das niedrigste Potenzial P₀. Hiernach folgend werden alle angrenzenden Felder mit einem nächsthöheren Potenzial P₁ belegt. Dieser Schritt wiederholt sich so lange, bis alle Felder gefüllt sind (vgl. Fig. 8). Es ergeben sich in der in den Fig. 8 bis 10 dargestellten Kartografie K insgesamt 6 unterschiedliche Potenziale P₀ bis P₅, wobei ausgehend von den Hindernissen (Wände, gegebenenfalls mit kartografierte Hindernisse wie Schränke oder dgl.) sich das Potenzial, je größer der Abstand des Feldes von diesem ist, erhöht.

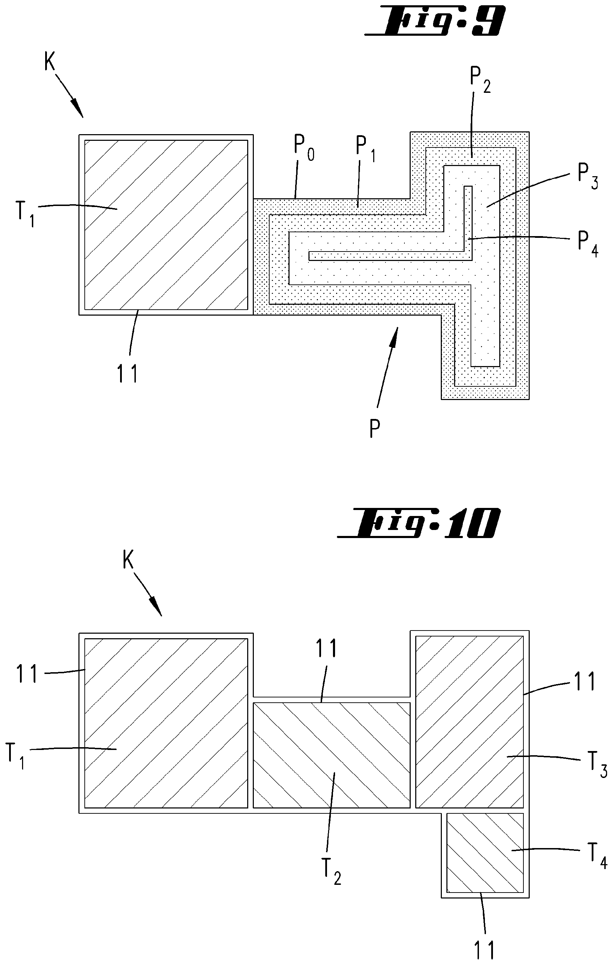

Diese Potenziale P₀ bis P₅ werden analysiert, woraus sich die generelle Aussage ergibt, dass je höher das Potenzial ist, desto größer ist die umgebende freie Fläche. Diese Analyse wird erfindungsgemäß genutzt zur Aufteilung in Teilgebiete T₁ bis T₄. So wird zunächst wie in Fig. 9 schematisch dargestellt, um das höchste Potenzial P₅ herum eine möglichst große Grundfigur 11 eingepasst, wobei die Wahl der Grundfigur 11 abhängig ist vom umfangsmäßigen Verlauf der Wände bzw. Hindernisse. So ist gemäß der Darstellung in Fig. 9 zugeordnet dem Bereich höchsten Potenzials P₅ ein Quadrat größtmöglicher Ausdehnung eingepasst. Hiernach wird die Potenzialkarte P in einem nächsten Schritt neu erzeugt ohne die bereits identifizierte Fläche des Teilgebietes T₁ zu berücksichtigen. Ein entsprechendes Ergebnis zeigt die Darstellung in Fig. 9. Die vorbeschriebene Analyse der Potenziale und Anpassung möglichst großflächiger Grundfiguren 11 wiederholt sich so lange, bis die gesamte Kartografie K abgedeckt und in entsprechende Teilbereiche T₁ bis T₄ anhand geometrischer Grundfiguren 11 aufgeteilt ist.

Ein weiteres Merkmal zur Unterteilung des Gesamtgebietes G in Teilgebiete sind, die Räume untereinander verbindende Türdurchbrüche 12. Hierzu wird in einem Verfahren die vorab erstellte Kartografie K hinsichtlich etwaig vorhandener und zu erfassender Türdurchbrüche 12 analysiert, dies weiter anhand typischer grundrissmäßiger Erstreckungsmaßen derartiger Türdurchbrüche 12 bzw. vorgesehener Türzargen. Türdurchbrüche 12 bzw. Türzargen haben in der Regel typische, normierte Türbreiten a zwischen 60 und 100 cm, weiter beispielsweise 61 cm, 73,5 darüber hinaus auch typische Türtiefen b in Durchgangsrichtung zwischen 10 und 50 cm. Diese typischen, gegebenenfalls normierten Maße bezüglich Türbreiten a und Türtiefen b sind in einem geräteseitigen Speicher hinterlegt und dienen dem Abgleich mit aus der erstellten Kartografie K extrahierten geometrischen Objekten O mittels Mustererkennung, wozu ein entsprechend vorgesehener Algorithmus gezielt nach solchen Objekten innerhalb der Kartografie K sucht. Ein solches Objekt O, welches auf einen Türdurchbruch 12 rückschließen lässt, ist in Fig. 3 beispielhaft gekennzeichnet.

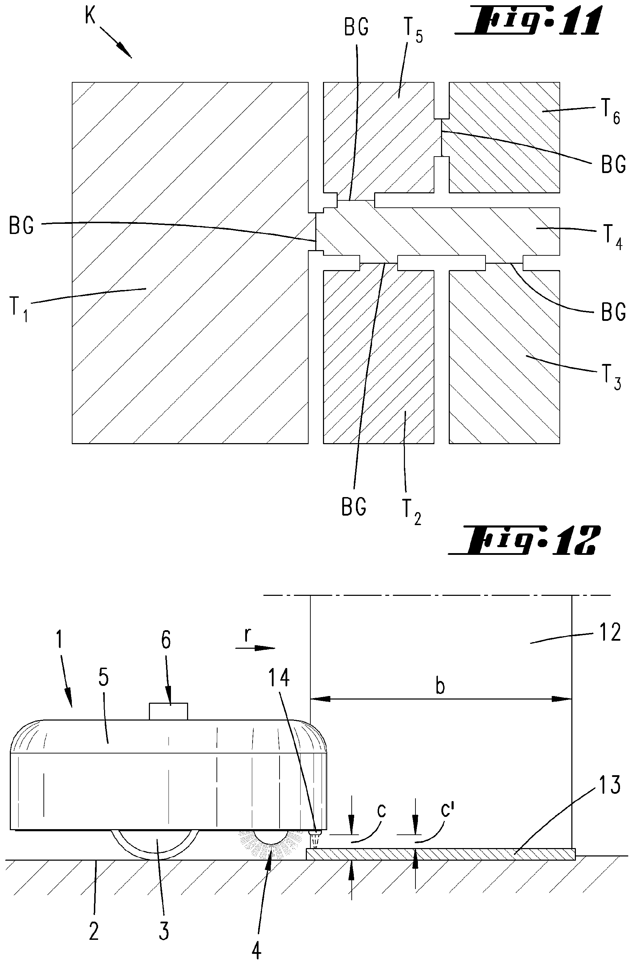

Anhand der zufolge Analyse erkannten Türbereiche bzw. Türdurchbrüche 12 wird das Gesamtgebiet G in Teilgebiete T₁ bis T₆ gemäß der Darstellung in Fig. 11 aufgeteilt.

Eine weitere Möglichkeit zur Aufteilung des Gesamtgebietes G in Teilgebiete unter Berücksichtigung von Türdurchbrüchen 12 besteht in der Erkennung von Türschwellen 13. Diese sind insbesondere im Altbaubereich im Bereich eines Türdurchbruches 12 bodenseitig angeordnet, stellen entsprechend eine Erhebung gegenüber dem Boden 2 dar.

Das Gerät 1 ist bevorzugt bodenseitig des Chassis, weiter bevorzugt in üblicher Verfahrrichtung r einem stirnseitigen Bereich des Gerätes 1 zugewandt, mit einem Bodenabstandssensor 14 versehen. In Fig. 12 ist eine solche Anordnung dargestellt, wobei hier als Bodenabstandssensor 14 ein Ultraschallsensor dient. Dessen Signal ist nach unten in Richtung auf dem Boden 2 gerichtet, wobei zufolge Laufzeitmessung des Signals der Abstand c zwischen Bodenabstandssensor 14 und Oberfläche des Bodens 2 ermittelbar ist.

Im Zuge einer Orientierungsfahrt und damit einhergehender Erstellung der Kartografie K überfährt das Gerät 1 bei einem Durchfahren durch einen Türdurchbruch 12 eine Türschwelle 13, welche Türschwelle 13 zufolge des über den Bodenabstandssensor 14 ermittelten verringerten Abstandes c' erkannt wird. Bevorzugt ist diesbezüglich weiter, dass insbesondere hinsichtlich des Differenzmaßes zwischen dem Abstand c zwischen Bodenabstandssensor 14 und Boden 2 und c' zwischen Bodenabstandssensor 14 und Oberfläche der Türschwelle 13 ein Mindestschwellwert hinterlegt ist, so dass beispielsweise Differenzen im Übergang von einem hochflorigen Teppichboden auf einen Hartboden keine Berücksichtigung finden. So ist beispielsweise ein Mindestschwellmaß (Differenz zwischen c und c') von 10 oder 15 mm vorgegeben.

Darüber hinaus kann auch die in Durchfahrtrichtung betrachtete Tiefe der Türschwelle 13 zum Erkennen eines Türdurchbruches 12 Berücksichtigung finden. Hierzu sind bevorzugt in dem Gerät typische Türtiefen b hinterlegt. Entspricht das Differenzmaß (vertikale Höhe der Türschwelle 13) sowie das Maß der Schwellentiefe - gegebenenfalls unter Berücksichtigung von Toleranzen - den hinterlegten Werten, so wird selbsttätig durch das Gerät 1 ein Türdurchbruch 12 erkannt, woraufhin ein Abschluss des zuvor durchfahrenden Teilgebietes und ein Anlegen eines neuen Teilgebietes selbsttätig erfolgt. Die Türschwellentiefe in Verfahrrichtung wird beispielsweise anhand einer Abstandsmessung mittels einer Sensoranordnung 6 ermittelt, alternativ unter Nutzung eines Radsensors zur Erfassung des Verfahrweges zwischen der Registrierung einer Erhebung zum Anfang einer Türschelle 13 und einer Absenkung zum Ende der Türschwelle 13.

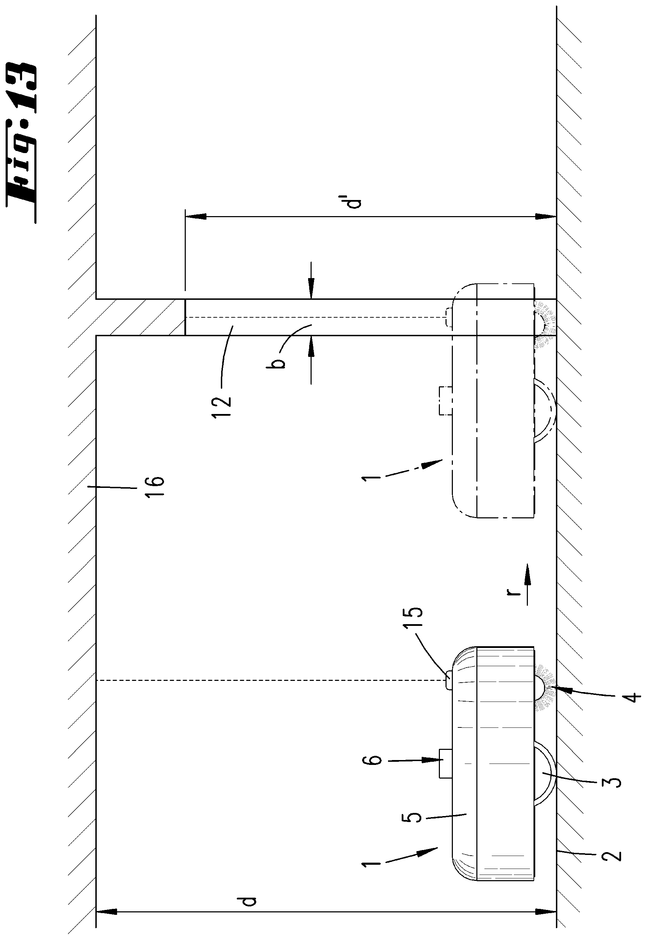

Alternativ oder auch kombinativ zu der vorbeschriebenen Lösung ist das Gerät 1 weiter gemäß der Darstellung in Fig. 13 mit einem Ultraschallsensor 15 zur Erfassung der Deckenhöhe d versehen. Dieser Ultraschallsensor 15, alternativ Infrarotsensor, ist in dem dargestellten Ausführungsbeispiel oberseitig der Gerätehaube 5 angeordnet, wobei dessen Messstrahl nach vertikal oben gerichtet ist. Mittels einer Laufzeitmessung ist auf den vertikalen Abstand zur Decke 16 zurückzuschließen. Diese Messung der Deckenhöhe d erfolgt bevorzugt im Zuge der Orientierungsfahrt zum Anlegen der Kartografie K, wobei im Zuge des Verfahrens des Gerätes 1 in Verfahrrichtung r signifikante Änderungen in der Deckenhöhe d erfasst werden. So verringert sich die Deckenhöhe d' im Bereich eines Türdurchbruches 12 um ein signifikantes Maß von beispielsweise 30 bis 80 cm gegenüber der ursprünglichen Deckenhöhe d. Dieses verringerte Deckenmaß d' lässt auf einen Türdurchbruch 12 schließen, woraufhin das Gerät 1 im Zuge der Kartografierung selbsttätig den zuvor durchfahrenden Teilbereich abschließt und einen neuen Teilbereich anlegt.

Die Deckenhöhenermittlung erfolgt in weiter bevorzugter Ausgestaltung in Kombination mit einer Messung des Verfahrweges innerhalb der Zone verringerten Deckenhöhe d', welcher ermittelte Verfahrweg der Türtiefe b entspricht. Liegt dieses ermittelte Maß b im Wertebereich im Gerät 1 hinterlegter Türtiefenmaße, ist dies weiter ein Indiz für das Durchschreiten eine Türdurchbruches 12.

Weiter wird eine Unterteilung des Gesamtgebietes G anhand vorbestimmter Gegenstände 17, wie weiter beispielsweise Türklinken vorgenommen. Im Falle der Erfassung von Türklinken 18 erfolgt eine entsprechende Auswertung gegebenenfalls kombinativ zu einer der vorbeschriebenen Lösungen zum Erkennen von Türdurchbrüchen 12.

Das Gerät 1 ist hierzu mit einem Bilderkennungssystem versehen, beinhaltend eine elektronische Kamera 19 sowie eine geräteinterne Auswerteeinheit. Mittels dieser visuellen Detektionseinheit und entsprechender Bildverarbeitungsalgorithmen, sowie einer hinterlegten Datenbank aller zu berücksichtigender und bekannter Gegenstände 17, insbesondere Türklinken 18, können diese als charakteristisches Merkmal zur Bereichserkennung, insbesondere zur Erkennung von Türdurchbrüchen 12, genutzt werden, weiter zur selbsttätigen Aufteilung des Gesamtgebietes G in Teilgebiete. Der durch die Kamera 19 im Zuge des Verfahrens des Gerätes 1 erfasste Bereich bzw. das Abbild A dieses Bereiches wird ständig mit den hinterlegten Informationen in der Datenbank verglichen. Wird so in dem dargestellten Ausführungsbeispiel eine Türklinke 18 erkannt, ist dies für das Gerät 1 ein Indiz für einen zumindest benachbarten Türdurchbruch 12, so dass dieser weiter beispielsweise im Zuge der weiteren Orientierungsfahrt bei einem entsprechend Durchfahren auch erkannt und erfasst wird, auch wenn dieser gegebenenfalls nicht den üblichen, bevorzugt hinterlegten Maßen hinsichtlich der Türbreite und Türtiefe, gegebenenfalls Türhöhe entspricht.

Ein weiteres Kriterium für das Erkennen eines neuen Teilgebietes bietet weiter bevorzugt die Auswertung von Helligkeits- und/oder Farbinformationen. Das Gerät kann hierbei unter Zuhilfenahme entsprechender Sensorik eine Helligkeit- und/oder Farbmessung insbesondere des in Verfahrrichtung vor dem Gerät 1 liegenden Bereiches vornehmen. Dies weiter bevorzugt sowohl hinsichtlich des Bodens 2 als auch der angrenzenden Wände und/oder etwaiger Türzargen oder dgl. Hierbei wird stets überprüft, ob eine signifikante Veränderung hinsichtlich der Helligkeits- und/oder Farbmesswerte vorliegen, wobei ausgenutzt wird, dass sowohl Bodenbeläge als auch Wände, darüber hinaus auch Türzargen oder dgl. in verschiedenen Räumen hinsichtlich der Lichtreflexion und/oder hinsichtlich der Farbe unterschiedlich sind.

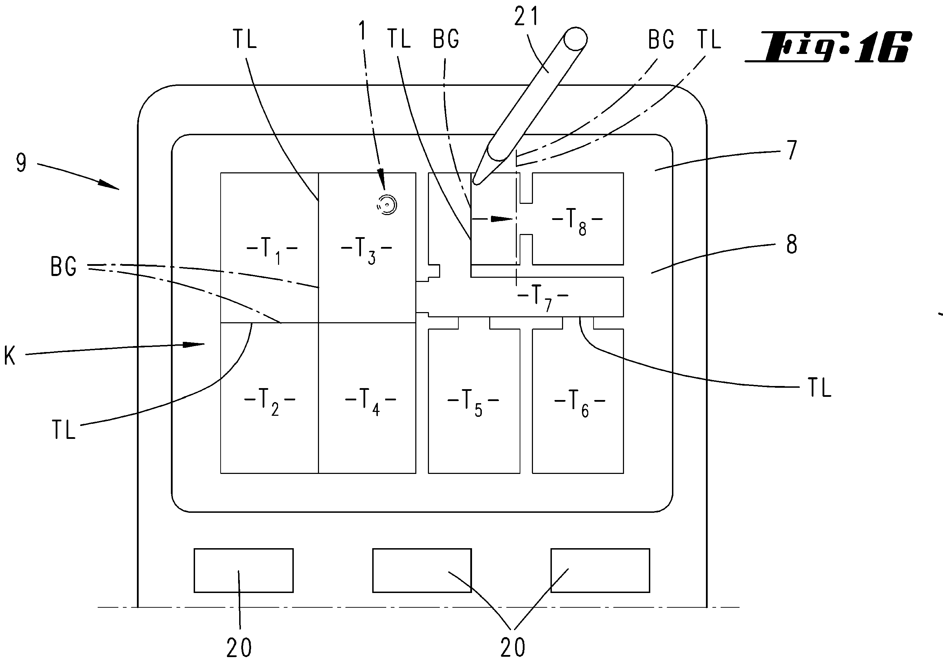

Ist eine Fernbedienung 9 für das Gerät 1 vorgesehen, so weist dieses bevorzugt einen Bildschirm 7 auf, insbesondere zur Anzeige der vom Gerät 1 zur Fernbedienung 9 übermittelten Kartografie K mit Bereichsgrenzen BG zur Differenzierung der Teilgebiete T₁ bis T₈. In dem in Fig. 16 dargestellten, schematischen Beispiel ist eine Kartografie K mit Teilgebieten entsprechend der Ausführung in Fig. 5 dargestellt.

Weiter wird innerhalb der Kartografie K die momentane Position des Gerätes 1 angezeigt, so dass der Benutzer visuell über den momentanen Standort des Gerätes informiert ist.

Mittels gegebenenfalls weiter vorgesehener Taster 20 sind über die Fernbedienung 9 Befehle an das Gerät 1 übermittelbar, so beispielsweise Befehle zum Heranrufen, Starten oder Stoppen einer Reinigungsarbeit oder dgl. Weiter kann, insbesondere bei einer Ausführung des Bildschirms 7 als Touch-Screen 8 ein Ordern des Gerätes 1 in einen bestimmten Raum bzw. in ein bestimmtes Teilgebiet unmittelbar über den Bildschirm 7 erfolgen, wozu beispielsweise dem Benutzer ein Touch-Pen 21 zur Verfügung steht.

Mittels eines solchen Touch-Pens 21 ist in einer Weiterbildung des Erfindungsgegenstandes auch eine nachträgliche Manipulation der vom Gerät 1 selbsttätig erstellten Teilgebiete durch den Benutzer möglich, so insbesondere zufolge Verschiebung der durch die Trennungslinie TL dargestellten Bereichsgrenzen BG. So ist beispielsweise die anhand eines vorgegebenen Algorithmus vorgenommene Aufteilung des Raumes R₅ in zwei, jeweils einem benachbarten Raum zugeordnete Teilgebiete T₇ und T₈ unerwünscht. Der Benutzer erfasst mittels des Touch-Pens 21 die, den Raum R₅ trennende Bereichsgrenze BG und zieht diese in eine gewünschte Position, dies weiter unter entsprechender Verringerung der Fläche des Teilgebietes T₈ und entsprechender Vergrößerung des Teilgebietes T₇. Auch ist in diesem Zusammenhang das Anlegen einer neuen Bereichsgrenze BG möglich, um so weiter in dem dargestellten Ausführungsbeispiel dem Raum R₅ ein gesondertes Teilgebiet zuzuordnen. Jede Änderung der Bereichszuordnungsgrenzen wird bevorzugt abgespeichert, so dass diese bei einer nächsten Inbetriebnahme des Gerätes wieder vorliegen.

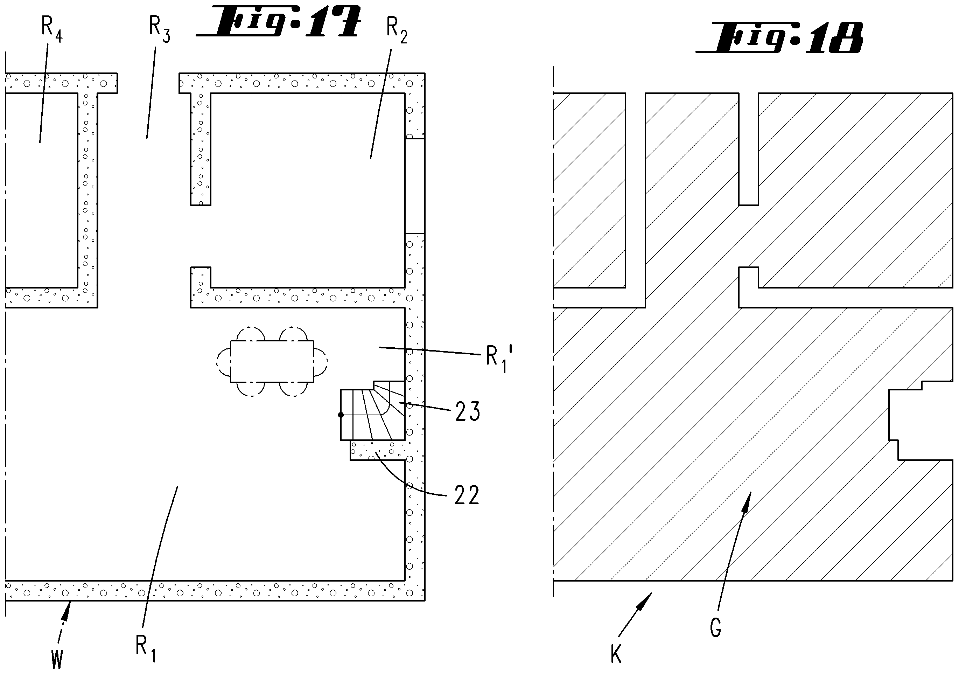

Anhand der Fig. 17 bis 20 wird nachstehend eine weitere Verfahrensweise zur Unterteilung eines Gesamtgebietes in Teilbereiche beschrieben. Der in Fig. 17 dargestellte Grundriss einer Wohnung W zeigt im dargestellten Raum R₁ (beispielsweise ein Wohnraum) einen baulich nicht eindeutig abgeteilten Essbereich R₁' auf. Eine optische, jedoch für die Sensorik des Gerätes 1 nicht als solche erkennbare Andeutung einer Trennung der beiden Bereiche des Raumes R₁ ist durch eine in den Raum einragende, gekürzte Wandscheibe 22 und eine daran anschließende Treppe 23 gegeben.

Mittels der vorbeschriebenen Sensorik erstellt das Gerät 1 eine wie in Fig. 18 dargestellte Gesamtkarte G, welche bereichs- und raumübergreifend die Flächenbegrenzungen - hier entsprechend auch definiert durch die Wandscheibe 22 und die Treppe 23 - darstellt.

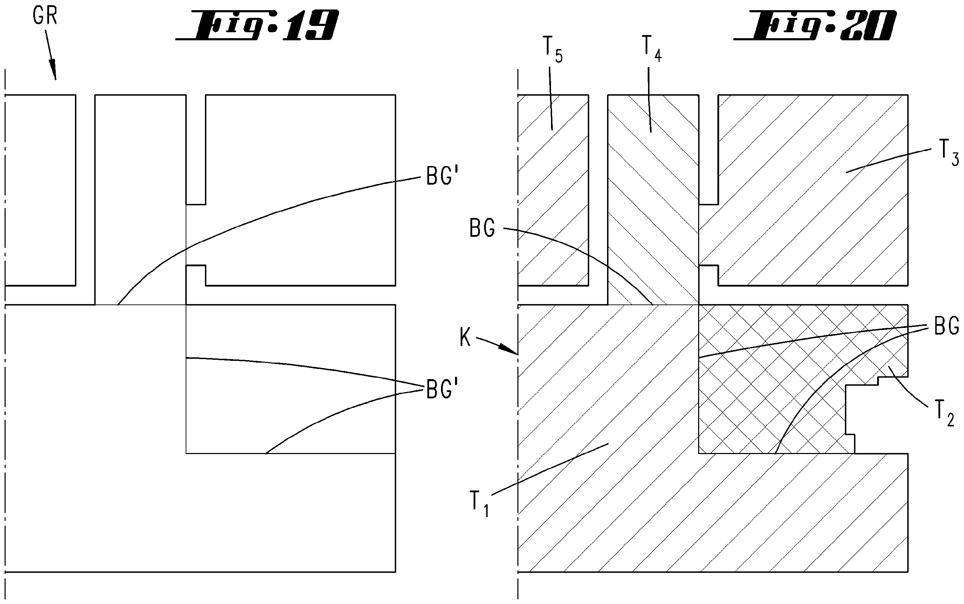

Eine Unterteilung der Gesamtkarte G in Teilgebiete kann nach einem oder mehreren der vorbeschriebenen Verfahren durchgeführt werden. Alternativ oder auch kombinativ hierzu ist weiter vorgesehen, dass die erstellte Gesamtkarte G mit in einem bevorzugt nicht flüchtigen Speicher des Gerätes 1 und /oder einer Fernbedienung 9 abgelegten und somit vorgegebenen Grundrissen GR verglichen wird. Ein solcher vorgegebener, abgelegter Grundriss GR ist in Fig. 19 dargestellt. Auch wenn dieser von den Flächenabmessungen bzw. von den Längen-/Breitenverhältnissen der Einzelflächen nicht zwingend identisch mit denen der erstellten Gesamtkarte G ist, ist zufolge einer festgestellten Ähnlichkeit zu einem solchen Standardgrundriss GR eine selbsttätige Unterteilung der Gesamtkarte G durchführbar, dies weiter unter Nutzen von in dem Standardgrundriss GR hinterlegten Vorgabe-Bereichs grenzen BG'.

So ist in dem dargestellten Ausführungsbeispiel insbesondere eine Ähnlichkeit in der Aufteilung des in Fig. 17 mit R₁ dargestellten Raumes zufolge entsprechender Auswerteverfahren erkennbar, dies weiter zufolge des Verlaufs der Vorgabe- Bereichsgrenze BG' in dem hinterlegten Grundriss GR. Entsprechend erfolgt eine Unterteilung der Gesamtkarte G gemäß der Darstellung in Fig. 20 in Teilgebiete T₁ bis T₅, wobei der Teilbereich T₂ den Essbereich R₁' gemäß der Darstellung in Fig. 17 umfasst, dies weiter unter Verlängerung des Verlaufs der Wandscheibe 22 und Anlage einer hierzu senkrecht verlaufenden Bereichsgrenze BG.

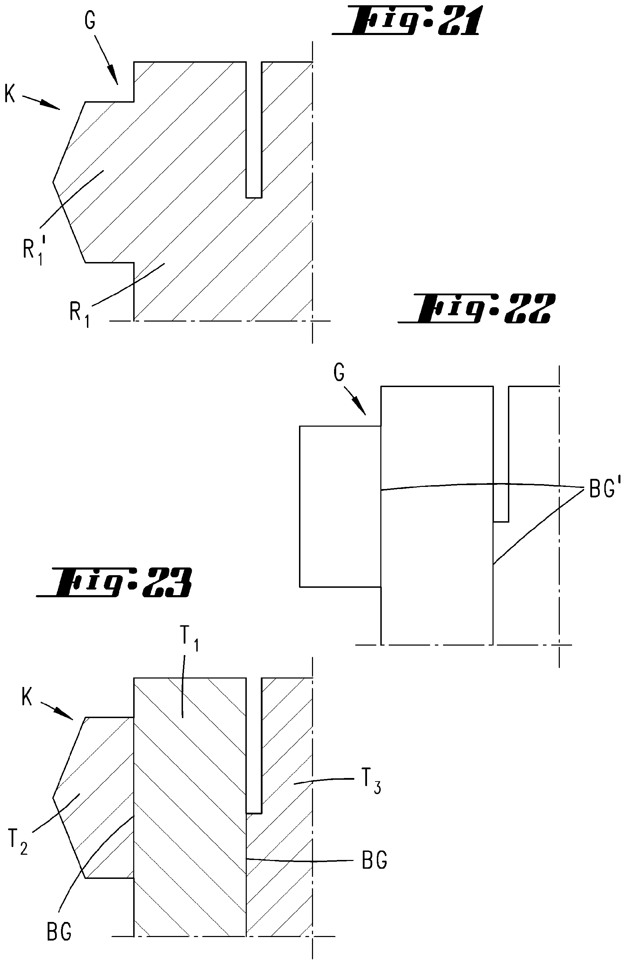

Der Vergleich mit vorgegebenen, bevorzugt in einem Speicher abgelegten Standardgrundrissen bezieht sich nicht zwingend nur auf Gesamtgrundrisse, wie dies beispielhaft anhand der Fig. 17 bis 20 dargestellt ist, sondern darüber hinaus bevorzugt auch auf Teilgrundrisse, weiter insbesondere auf architekturtypische Ausgestaltungen, wie beispielsweise Teilgrundrisse mit Erkern oder Wintergärten. So ist gemäß dem Ausführungsbeispiel in den Fig. 21 bis 23 eine Gesamtkarte G erstellt, mit einem Raum R₁, dem bevorzugt barrierefrei und weiter bevorzugt frei von Teilbereichsgrenzen markierenden Trennwänden ein Wintergartenbereich (Raum R₁') zugeordnet ist. Ein Abgleich der bevorzugt in einem Speicher abgelegten Grundrisse GR führt zur Feststellung einer Ähnlichkeit zu einem Grundriss GR gemäß Fig. 22. Wenngleich hier der vergleichbare, ausgestellte Bereich grundrissmäßig nicht exakt dem Grundriss des im Zuge der Gesamtkartierung erfassten Raumbereiches R₁' entspricht, so ist doch eine Ähnlichkeit vorhanden. Die in dem entsprechenden Grundriss GR vorgegebene Bereichsgrenze BG' wird zur Unterteilung der Gesamtkarte G in Teilgebiete T₁ und T₂ in die Kartografie K übernommen.

Gegenstand der Erfindung, der sowohl allein als auch in Kombination mit einem der vorbeschriebenen Merkmale Bedeutung haben kann ist auch ein Verfahren, bei welchem die Unterteilung in Teilgebiete anhand geometrischer Grundfiguren (11) wie Quadrate und/oder Recht- und/oder Dreiecke und/oder Kreise vorgenommen wird und/oder bevorzugt, dass eine bestimmte Größe der geometrischen Grundfigur (11) aus einer erfassten Raumgrenze abgeleitet wird.

Gegenstand der Erfindung, der sowohl allein als auch in Kombination mit einem der vorbeschriebenen Merkmale Bedeutung haben kann ist auch ein Verfahren, bei welchem nach Erfassen des Gesamtgebietes (G) Teilgebiete (T₁ bis Ts) gleicher Größe durch Division durch eine vorgegebene Zahl bestimmt werden und/oder bevorzugt, dass die vorgegebene Zahl im Hinblick auf die erfasste Gesamtfläche vorbestimmt variabel ist.

Gegenstand der Erfindung, der sowohl allein als auch in Kombination mit einem der vorbeschriebenen Merkmale Bedeutung haben kann ist auch ein Verfahren, bei welchem die vom Gerät (1) bestimmten Teilgebiete auf einem Bildschirm (7) angezeigt werden und/oder bevorzugt, dass der Nutzer des Gerätes (1) aus den dargestellten Teilgebieten (T₁ bis T₈) eine Auswahl hinsichtlich eines oder mehrerer Teilgebiete vornehmen kann und/oder bevorzugt, dass der Nutzer des Gerätes (1) beispielsweise mittels eines Touch-Screens (8) dargestellte Bereichsgrenzen (BG) zur Änderung der Teilgebiete (T₁ bis T₈) verändern kann.

### BEZUGSZEICHENLISTE

- 1: Gerät
- 2: Boden
- 3: Verfahrrad
- 4: Bürste
- 5: Gerätehaube
- 6: Sensoranordnung
- 7: Bildschirm
- 8: Touch-Screen
- 9: Fernbedienung
- 10: Pfeil
- 11: Grundfigur
- 12: Türdurchbruch
- 13: Türschwelle
- 14: Bodenabstandssensor
- 15: Ultraschallsensor
- 16: Decke
- 17: Gegenstand
- 18: Türklinke
- 19: Kamera
- 20: Taster
- 21: Touch-Pen
- 22: Wandscheibe
- 23: Treppe

- A: Abbild
- B₁ bis B₅: Bodenbelag
- BG: Bereichsgrenze
- BG': Vorgabe-Bereichsgrenze
- G: Gesamtkarte
- GR: Grundriss
- K: Kartografie
- L₀: Linie
- O: Objekt
- P: Potenzialkarte
- P₀ bis P₅: Potenzial
- R₁ bis R₆: Raum
- T₁ bis T₈: Teilgebiet
- TL: Trennungslinie
- W: Wohnung

- a: Türbreite
- b: Türtiefe
- c: Abstand
- c': Abstand
- d: Deckenhöhe
- d': Deckenhöhe
- r: Verfahrrichtung
- x: Achse

## Patentansprüche

1. Verfahren zur Orientierung eines selbsttätig verfahrbaren Gerätes (1), insbesondere eines Reinigungsgerätes zur Reinigung eines Bodens (2) wie ein Saug- und/oder Kehrroboter, wobei das Gerät (1) zumindest selbsttätig eine Kartierung eines Gesamtgebietes (G) beispielsweise durch Rundum-Abstandsmessung vornimmt, wobei das Gerät (1) zugleich im Zuge der Kartierung des Gesamtgebietes oder danach eine selbsttätige Unterteilung des Gesamtgebietes (G) in Teilgebiete (T₁ bis Ts) vornimmt, wobei die Unterteilung in Teilgebiete im Hinblick auf unterschiedliche Bodenbeläge (B₁ bis B₅) vorgenommen wird, **dadurch gekennzeichnet, dass** zusammenhängende Gebiete gleicher Rauigkeit und/oder Polausrichtung zu einem Teilgebiet zusammengefasst und abgespeichert werden.

2. Verfahren nach Anspruch 1, **dadurch gekennzeichnet, dass** die Unterteilung in Teilgebiete entsprechend einer vorbestimmten Flächengröße eines Teilgebietes (T₁ bis T₈) vorgenommen wird.

3. Verfahren nach einem der vorhergehenden Ansprüche, **dadurch gekennzeichnet, dass** der zwischen zwei gegenüberliegenden Wänden gemessene Abstand mit vorgegebenen Werten, die einer Türbreite (a) entsprechen, verglichen wird, zur Bestimmung eines Flächenbereiches als Türbereich.

4. Verfahren nach Anspruch 3, **dadurch gekennzeichnet, dass** die erfassten Werte des Flächenbereiches sowohl hinsichtlich des Abstandes der gegenüberliegenden Wände wie auch einer bodenparallelen Länge (b) der Wände zur Bestimmung des Flächenbereiches als Türbereich herangezogen werden.

5. Verfahren nach einem der vorhergehenden Ansprüche, **dadurch gekennzeichnet, dass** mittels eines Bodenabstandssensors (14) erfasste Unterschiede in der Bodenhöhe mit vorgegebenen Werten, die einer Türschwelle (13) entsprechen, verglichen werden, zur Bestimmung eines Flächenbereiches als Türbereich.

6. Verfahren nach einem der vorhergehenden Ansprüche, **dadurch gekennzeichnet, dass** ein Abstand (d, d') zur Decke (16) gemessen wird.

7. Verfahren nach Anspruch 6, **dadurch gekennzeichnet, dass** eine signifikante Änderung der erfassten Deckenhöhe (d, d') zur Bestimmung einer Bereichsgrenze (BG) berücksichtigt wird.

8. Verfahren nach einem der vorhergehenden Ansprüche, **dadurch gekennzeichnet, dass** eine Helligkeits- und/oder Farbmessung vorgenommen wird und ein signifikanter Unterschied in der Helligkeit und/oder in dem Farbkontrast zur Bestimmung einer Bereichsgrenze (BG) herangezogen wird.

9. Verfahren nach Anspruch 8, **dadurch gekennzeichnet, dass** der Helligkeitswert und/oder der Farbkontrast eines Bodens (2) und/oder einer Wand berücksichtigt wird.

10. Verfahren nach einem der vorhergehenden Ansprüche, **dadurch gekennzeichnet, dass** zusätzlich mittels einer Kamera (19) erfasste Bilder (A) von im Raum befindlicher Gegenstände (17) ausgewertet werden, zur Erkennung von Gegenständen (17) wie beispielsweise Türklinken (18) anhand einer Bilddatenbank und/oder zur Erkennung von typischen Strukturen wie etwa winklig im Raum stehender Wände als Türen.

11. Verfahren nach Anspruch 10, **dadurch gekennzeichnet, dass** ein erfasster typischer Gegenstand (17) wie eine Tür und/oder eine Türklinke (18) zur Bestimmung eines Teilgebietes (T₁ bis Ts) herangezogen wird.

12. Verfahren nach einem der vorhergehenden Ansprüche, **dadurch gekennzeichnet, dass** eine Drifterkennung vorgenommen wird und dass ein signifikanter Wechsel in der erfassten Drift zur Teilbereichsbegrenzung herangezogen wird.

13. Verfahren nach einem der vorhergehenden Ansprüche, **dadurch gekennzeichnet, dass** das Gesamtgebiet (G) mit einem vorgegebenen Grundriss (GR) verglichen wird und eine Unterteilung des Gesamtgebietes (G) in Teilgebiete entsprechend einer durch den vorgegebenen Grundriss (GR) gegebenen Unterteilung vorgenommen wird.

## Claims

1. Method for orienting a self-propelling device (1), in particular a cleaning device for cleaning a floor (2), such as a vacuum and/or sweeping robot, the device (1) at least automatically mapping a total region (G) for example by means of omnidirectional distance measurement, the device (1) also automatically dividing the total region (G) into partial regions (T₁ to T₈) during or after the mapping of the total region, the division into partial regions being carried out in respect of different floor coverings (B₁ to B₅), **characterised in that** continuous regions of the same roughness and/or pile orientation are combined to form one partial region and stored.

2. Method according to claim 1, **characterised in that** the division into partial regions is carried out in accordance with a predetermined surface area of a partial region (T₁ to T₈).

3. Method according to either of the preceding claims, **characterised in that** the distance measured between two opposing walls is compared with predefined values which correspond to a door width (a) in order to determine a surface region as a door region.

4. Method according to claim 3, **characterised in that** the detected values of the surface region with regard to both the distance of the opposing walls and to a length (b) of the walls that is parallel to the floor, are used to determine the surface region as a door region.

5. Method according to any of the preceding claims, **characterised in that** differences in the floor height that are detected by a ground clearance sensor (14) are compared with predefined values which correspond to a door sill (13) in order to determine a surface region as a door region.

6. Method according to any of the preceding claims, **characterised in that** a distance (d, d') from the ceiling (16) is measured.

7. Method according to claim 6, **characterised in that** a significant change in the detected ceiling height (d, d') is taken into account in order to determine a region boundary (BG).

8. Method according to any of the preceding claims, **characterised in that** brightness and/or colour is measured and a significant difference in the brightness and/or in the colour contrast is used to determine a region boundary (BG).

9. Method according to claim 8, **characterised in that** the brightness value and/or the colour contrast of a floor (2) and/or a wall are taken into account.

10. Method according to any of the preceding claims, **characterised in that** images (A) of objects (17) located in the room, which images are additionally detected by a camera (19), are evaluated in order to identify objects (17) such as door handles (18) using an image database, and/or in order to identify typical structures, such as walls that are at an angle in the room, as doors.

11. Method according to claim 10, **characterised in that** a detected typical object (17) such as a door and/or a door handle (18) is used to determine a partial region (T₁ to T₈).

12. Method according to any of the preceding claims, **characterised in that** drift identification is carried out and **in that** a significant change in the detected drift is used to delimit a partial region.

13. Method according to any of the preceding claims, **characterised in that** the total region (G) is compared with a predefined floor plan (GR) and the total region (G) is divided into partial regions in accordance with a division specified by the predefined floor plan (GR).

## Revendications

1. Procédé d'orientation d'un appareil à déplacement automatique, en particulier d'un appareil de nettoyage pour nettoyer un sol (2) tel qu'un robot aspirateur et/ou balayeur, dans lequel l'appareil (1) réalise au moins automatiquement une cartographie d'une zone entière (G), par exemple, par mesurage tout autour, dans laquelle l'appareil (1) effectue simultanément une subdivision automatique de la zone entière (G) en sous-zones (T₁ à T₈) au cours de la cartographie de la zone entière ou par la suite, dans lequel la subdivision en sous-zones est effectuée par rapport à différents revêtements de sol (B₁ à B₅), **caractérisé en ce que** des zones contiguës de même rugosité et/ou orientation polaire sont réunies en une sous-zone et mémorisées.

2. Procédé selon la revendication 1, **caractérisé en ce que** la subdivision en sous-zones est effectuée selon une superficie prédéterminée d'une sous-zone (T₁ à T₈).

3. Procédé selon l'une des revendications précédentes, **caractérisé en ce que** la distance mesurée entre deux parois opposées est comparée à des valeurs prédéterminées qui correspondent à une largeur de porte (a) pour identifier une zone surfacique en tant que zone de porte.

4. Procédé selon la revendication 3, **caractérisé en ce que** les valeurs détectées de la zone surfacique en ce qui concerne à la fois la distance des parois opposées et une longueur (b) des parois qui est parallèle au sol sont utilisées pour identifier une zone surfacique en tant que zone de porte.

5. Procédé selon l'une des revendications précédentes, **caractérisé en ce que** des différences de hauteur de sol détectées au moyen d'un capteur de distance au sol (14) sont comparées à des valeurs prédéterminées qui correspondent à un seuil de porte (13), pour identifier une zone surfacique en tant que zone de porte.

6. Procédé selon l'une des revendications précédentes, **caractérisé en ce qu'**est mesurée une distance (d, d') au plafond (16).

7. Procédé selon la revendication 6, **caractérisé en ce qu'**un changement significatif de la hauteur de plafond détectée (d, d') est pris en compte pour déterminer une limite de zone (BG).

8. Procédé selon l'une des revendications précédentes, **caractérisé en ce qu'**une mesure de luminosité et/ou de couleur est effectuée et une différence significative de luminosité et/ou de contraste de couleur est utilisée pour déterminer une limite de zone (BG).

9. Procédé selon la revendication 8, **caractérisé en ce qu'**est pris en compte la valeur de luminosité et/ou du contraste de couleur d'un sol (2) et/ou d'un mur.

10. Procédé selon l'une des revendications précédentes, **caractérisé en ce que**, en outre, sont évaluées des images (A) d'objets (17) se trouvant dans la pièce qui sont saisies au moyen d'une caméra (19), pour la reconnaissance d'objets (17) tels que, par exemple, des poignées de porte (18), à partir d'une base de données d'images, et/ou pour la reconnaissance de structures typiques telles que des parois disposées dans la pièce en formant un angle en tant que portes.

11. Procédé selon la revendication 10, **caractérisé en ce qu'**un objet typique détecté (17) tel qu'une porte et/ou une poignée de porte (18) est utilisé pour déterminer une sous-zone (T₁ à T₈).

12. Procédé selon l'une des revendications précédentes, **caractérisé en ce qu'**est opérée une détection de dérive et **en ce qu'**un changement significatif de la dérive détectée est utilisé pour la délimitation de sous-zone.

13. Procédé selon l'une des revendications précédentes, **caractérisé en ce que** la zone complète (G) est comparée à un plan de sol prédéterminé (GR) et une subdivision de la zone complète (G) en sous-zones est effectuée conformément à une subdivision fournie par le plan de sol prédéterminé (GR).
